(19) Europäisches Patentamt
European Patent Office
Office européen des brevets

(11) EP 1 191 082 B1

(12) **EUROPÄISCHE PATENTSCHRIFT**

(45) Veröffentlichungstag und Bekanntmachung des Hinweises auf die Patenterteilung:
**18.02.2004 Patentblatt 2004/08**

(51) Int Cl.[7]: **C09K 19/46**, C09K 19/42, C09K 19/02

(21) Anmeldenummer: **01119683.9**

(22) Anmeldetag: **23.08.2001**

(54) **Flüssigkristalline Mischungen**

Liquid cristalline mixtures

Mélanges liquides cristallins

(84) Benannte Vertragsstaaten:
**AT BE CH CY DE DK ES FI FR GB GR IE IT LI LU MC NL PT SE TR**

(30) Priorität: **21.09.2000 DE 10047091**

(43) Veröffentlichungstag der Anmeldung:
**27.03.2002 Patentblatt 2002/13**

(73) Patentinhaber: **MERCK PATENT GmbH**
**64293 Darmstadt (DE)**

(72) Erfinder:
- **Kojima, Akihiro**
  **Atsugi-shi, Kanagawa Pref. 243-0813 (JP)**
- **Shimano, Fumio**
  **Miura-shi, Kanagawa Pref. 238-0111 (JP)**

(56) Entgegenhaltungen:
**EP-A- 1 002 848** **DE-A- 10 020 061**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 191 082 B1

Printed by Jouve, 75001 PARIS (FR)

## Beschreibung

Die Erfindung betrifft flüssigkristalline-Mischungen in verdrillten und hochverdrillten nematischen Flüssigkristallanzeigen (englisch: Twisted Nematic, kurz: TN; bzw. Supertwisted Nematic, kurz: STN) mit sehr kurzen Schaltzeiten und guten Steilheiten und Winkelabhängigkeiten sowie insbesondere deren Verwendung.

TN-Anzeigen sind bekannt, z.B. aus M. Schadt und W. Helfrich, Appl. Phys. Lett., 18, 127 (1971). STN-Anzeigen sind bekannt, z.B. aus EP 0 131 216 B1; DE 34 23 993 A1; EP 0 098 070 A2; M. Schadt und F. Leenhouts, 17. Freiburger Arbeitstagung Flüssigkristalle (8. 10.04.87); K. Kawasaki et al., SID 87 Digest 391 (20.6); M. Schadt und F. Leenhouts, SID 87 Digest 372 (20.1); K. Katoh et al., Japanese Journal of Applied Physics, Vol. 26, No. 11, L 1784-L 1786 (1987); F. Leenhouts et al., Appl. Phys. Lett. 50 (21), 1468 (1987); H.A. van Sprang und H.G. Koopman, J. Appl. Phys. 62 (5), 1734 (1987); T.J. Scheffer und J. Nehring, Appl. Phys. Lett. 45 (10), 1021 (1984), M. Schadt und F. Leenhouts, Appl. Phys. Lett. 50 (5), 236 (1987) und E.P. Raynes, Mol. Cryst. Liq. Cryst. Letters Vol. 4 (1 ), pp. 1-8 (1986). Der Begriff STN umfasst hier jedes höher verdrillte Anzeigeelement mit einem Verdrillungswinkel dem Betrage nach zwischen 160° und 360°, wie beispielsweise die Anzeigeelemente nach Waters et al. (C.M. Waters et al., Proc. Soc. Inf. Disp. (New York) (1985) (3rd Intern. Display Ccnference, Kobe, Japan), die STN-LCD's (DE OS 35 03 259), SBE-LCD's (T.J. Scheffer und J. Nehring, Appl. Phys. Lett. 45 (1984) 1021), OMI-LCD's (M. Schadt und F. Leenhouts, Appl. Phys. Lett. 50 (1987), 236. DST-LCD's (EP OS 0 246 842) oder BW-STN-LCD's (K. Kawasaki et al., SID 87 Digest 391 (20.6)).

insbesondere STN-Anzeigen zeichnen sich im Vergleich zu Standard-TN-Anzeigen durch wesentlich bessere Steilheiten der elektrooptischen Kennlinie und damit verbundenen besseren Kontrastwerten sowie durch eine wesentlich geringere Winkelabhängigkeit des Kontrastes aus.

Von besonderem Interesse sind TN- und STN-Anzeigen mit sehr kurzen Schaltzeiten insbesondere auch bei tieferen Temperaturen. Zur Erzielung von kurzen Schaltzeiten wurden bisher die Rotationsviskositäten $\nu_{20}$ der Flüssigkristallmischungen optimiert unter Verwendung von meist monotropen Zusätzen mit relativ hohem Dampfdruck. Die erzielten Schaltzeiten waren jedoch nicht für jede Anwendung ausreichend.

Zur Erzielung einer steilen elektrooptischen Kennlinie in den erfindungsgemäßen Anzeigen sollen die Flüssigkristallmischungen relativ große Werte für das Verhältnis der elastischen Konstanten $K_{33}/K_{11}$, sowie relativ kleine Werte für $\Delta\varepsilon/\varepsilon_\perp$ aufweisen, wobei $\Delta\varepsilon$ die dielektrische Anisotropie und die dielektrische Konstante senkrecht zur Moleküllängsachse ist.

Über die Optimierung des Kontrastes und der Schaltzeiten hinaus werden an derartige Mischungen weitere wichtige Anforderungen gestellt:

1. Breites d/p-Fenster
2. Hohe chemische Dauerstabilität
3. Hoher elektrischer Widerstand
4. Geringe Frequenz- und Temperaturabhängigkeit der Schwellenspannung.

Die erzielten Parameterkombinationen sind bei weitem noch nicht ausreichend, insbesondere für Hochmultiplex-STN-Anzeigen (mit einer Multiplexrate im Bereich von ca. 1/400), aber auch für Mittel- und Niedermultiplex-STN- (mit Multiplexraten im Bereich von ca. 1/64 bzw. 1/16), und TN-Anzeigen. Zum Teil ist dies darauf zurückzuführen, dass die verschiedenen Anforderungen durch Materialparameter gegenläufig beeinflusst werden.

Es besteht somit immer noch ein großer Bedarf für flüssigkristalline Mischungen, insbesondere für TN- und STN-Anzeigen mit sehr kurzen Schaltzeiten bei gleichzeitig großem Arbeitstemperaturbereich, hoher Kennliniensteilheit, guter Winkelabhängigkeit des Kontrastes und niedriger Schwellenspannung, die den oben angegebenen Anforderungen gerecht werden.

Der Erfindung liegt die Aufgabe zugrunde, TN- und STN-Anzeigen bereitzustellen, die die oben angegebenen Nachteile nicht oder nur in geringerem Maße und gleichzeitig kurze Schaltzeiten, insbesondere bei tiefen Temperaturen, und sehr gute Steilheiten aufweisen.

Es wurde nun gefunden, dass diese Aufgabe gelöst werden kann, wenn man nematische Flüssigkristallmischungen verwendet, die eine oder mehrere Verbindungen der Formel I

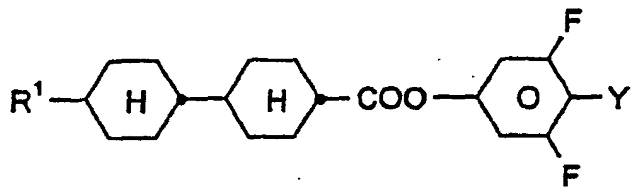

I

eine oder mehrere Verbindungen der Formel II

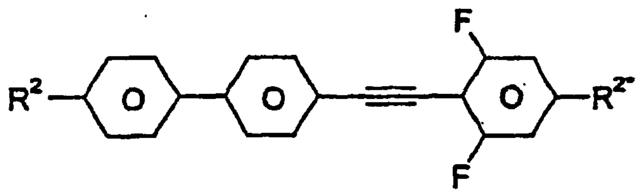

II

und eine oder mehrere Verbindungen der Formel I**R

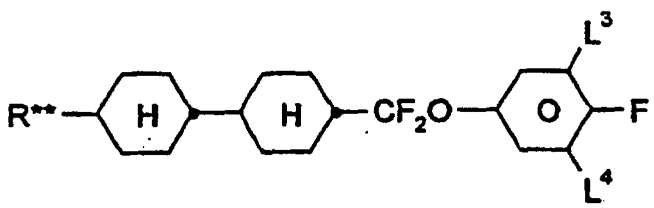

I**R

enthalten,
worin die einzelnen Reste folgende Bedeutung besitzen:

| | |
|---|---|
| $R^1$, $R^2$, $R^{2*}$ und $R^{**}$ | jeweils unabhängig voneinander eine gegebenenfalls fluorierte Alkyl-, Alkoxy-, Alkenyl- oder Alkenyloxygruppe mit bis zu 12 C-Atomen, wobei auch eine oder zwei nicht benachbarte $CH_2$-Gruppen durch -O-, - CH=CH-, -CO-, -OCO- oder -COO- so ersetzt sein können, daß O-Atome nicht direkt miteinander verknüpft sind, |
| Y | F, Cl, $OCF_3$, $OCHF_2$ oder $OCHFCF_3$, und |
| $L^3$und $L^4$ | jeweils unabhängig voneinander H oder F. |

Die Verwendung der Verbindungen der Formeln I und II in den Mischungen für erfindungsgemäße TN- und STN-Anzeigen bewirkt

- hohe Steilheit der elektrooptischen Kennlinie
- geringe Temperaturabhängigkeit der Schwellenspannung und
- sehr schnelle Schaltzeiten, insbesondere bei tiefen Temperaturen.

Die Verbindungen der Formel I und II verkürzen insbesondere deutlich die Schaltzeiten von TN- und STN-Mischungen bei gleichzeitiger Erhöhung der Steilheit und geringer Temperaturabhängigkeit der Schweilenspannung.
Weiterhin zeichnen sich die erfindungsgemäßen Mischungen durch folgende Eigenschaften aus

- niedrige Viskosität,
- niedrige Schwellenspannung und Operationsspannung,

- lange Lagerzeiten im Display bei tiefen Temperaturen.

Gegenstand der Erfindung ist weiterhin ein Flüssigkristall-Display mit

- zwei Trägerplatten, die mit einer Umrandung eine Zelle bilden,
- einer in der Zelle befindlichen nematischen Flüssigkristallmischung mit positiver dielektrischer Anisotropie,
- E!ektrodenschichten mit Orientierungsschichten auf den Innenseiten der Trägerplatten,
- einem Anstellwinkel zwischen der Längsachse der Moieküie an der Oberfläche der Trägerplatten und den Trägerplatten von 0 Grad bis 30 Grad, und
- einem Verdrillungswinkel der Flüssigkristallmischung in der Zelle von Orientierungsschicht zu Orientierungsschicht dem Betrag nach zwischen 22.5° und 600°.

dadurch gekennzeichnet, dass es eine Flüssigkristallmischung enthält, die mindestens eine Verbindung der Formel I, mindestens eine Verbindung der Formel I**R, und mindestens eine Verbindung der Formel II enthält.

In einer besonders bevorzugten Ausführungsform besteht die erfindungsgemäße Mischung aus

- einer nematischen Flüssigkristallmischung bestehend aus

    a) 15 - 75 Gew.% einer flüssigkristallinen Komponente A, bestehend aus einer oder mehreren Verbindungen mit einer dielektrischen Anisotropie von über +1,5;
    b) 25 - 85 Gew.% einer flüssigkristallinen Komponente B, bestehend aus einer oder mehreren Verbindungen mit einer dielektrischen Anisotropie zwischen -1,5 und +1,5;
    c) 0 - 20 Gew.% einer flüssigkristallinen Komponente D, bestehend aus einer oder mehreren Verbindungen mit einer dielektrischen Anisotropie von unter -1,5 und
    d) gegebenenfalls einer optisch aktiven-Komponente C in einer Menge, dass das Verhältnis zwischen Schichtdicke (Abstand der Trägerplatten) und natürlicher Ganghöhe der chiralen nematischen Flüssigkristallmischung etwa 0,2 bis 1,3 beträgt.

  wobei die Komponente A mindestens eine Verbindung der Formel I und mindestens eine Verbindung der Formel I**R und die Komponente B mindestens eine Verbindung der Formel II enthält.

Gegenstand der Erfindung sind auch entsprechende Flüssigkristallmischungen zur Verwendung in TN- und STN-Anzeigen, insbesondere in mittel- und niedrigmultiplexierten STN-Anzeigen.

Formel I umfasst insbesondere Verbindungen der Formeln I1 bis I5,

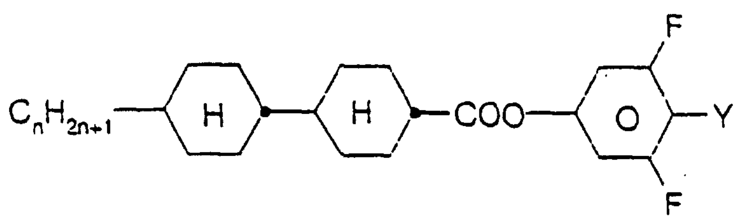

I1

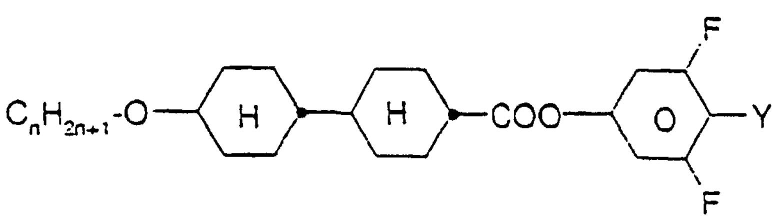

I2

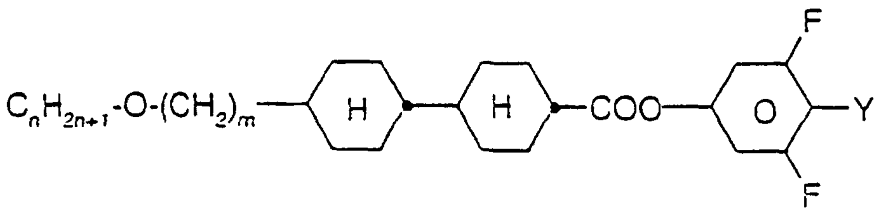

I3

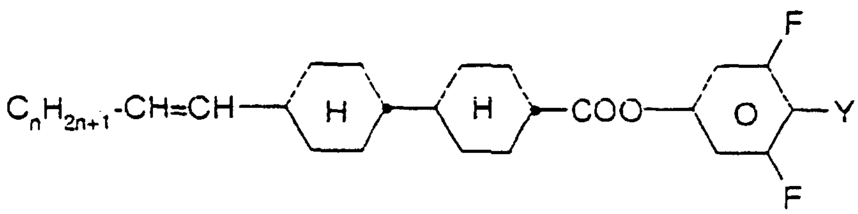

I4

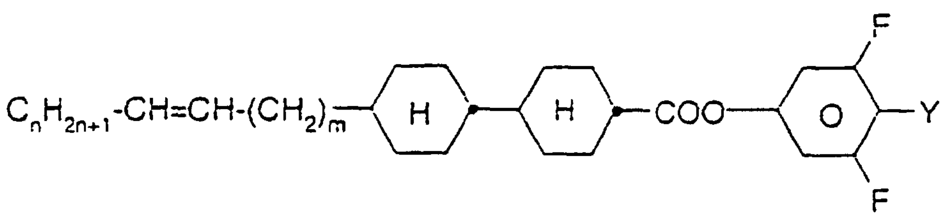

I5

worin n 1-10 und m 1-5 bedeutet, wobei $m+n \leq 10$.

Y bedeutet in den Verbindungen der Formel I vorzugsweise F, ferner $OCF_3$, m ist vorzugsweise 0, ferner 1 oder 2.

Besonders bevorzugt sind erfindungsgemäße TN- und STN-Anzeigen, die wenigstens eine Verbindung der Formel I1 und/oder I4, besonders bevorzugt jeweils wenigstens eine Verbindung der Formel I1 enthalten.

In den Formeln I4 und I5 bedeutet der Alkenylrest bevorzugt 1 E-alkenyl oder 3 E-alkenyl mit 2 bis 7 C-Atomen.

Der Anteil der Verbindungen der Formel I in den Mischungen beträgt 2,0 bis 30 Gew.% vorzugsweise 5,0 bis 25 Gew.%, insbesondere 5,0 bis 20 Gew.%.

Zu den bevorzugten Verbindungen der Formel II zählen insbesondere die Verbindungen der Formeln II1 bis II4,

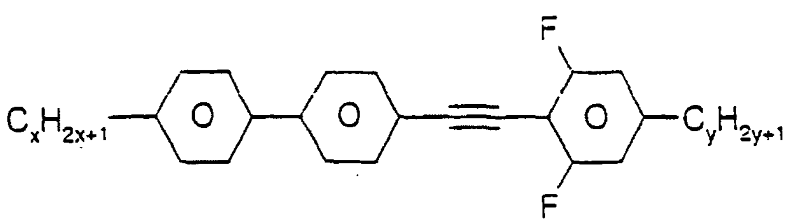

II1

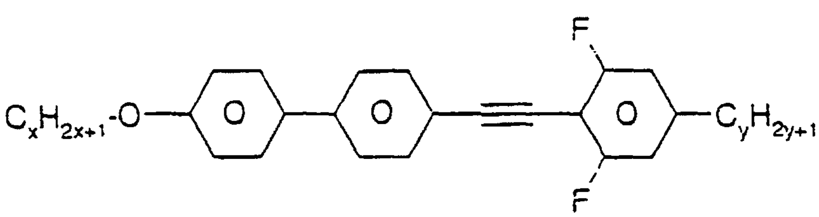

II2

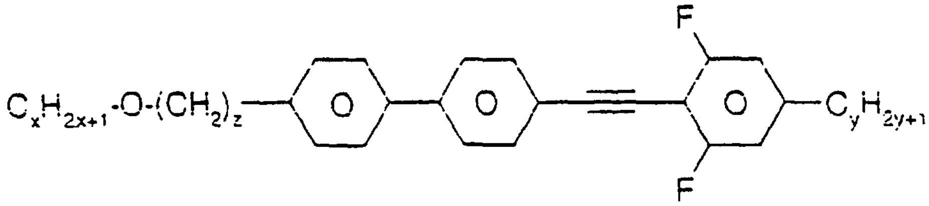

II3

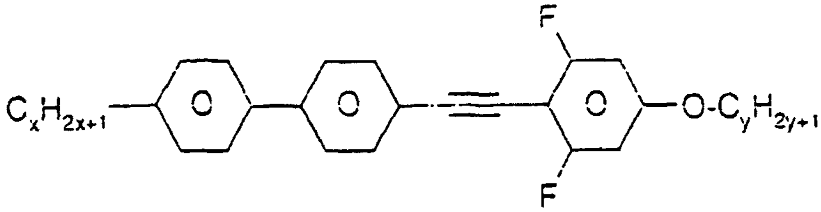

II4

worin x und y jeweils 1 bis 10 bedeuten, wobei x + y ≤ 10 und z 1-5 bedeutet.

Insbesondere bevorzugt sind Verbindungen der Formel II1. Vorzugsweise erhalten die erfindungsgemäßen Mischungen ein oder zwei Verbindungen der Formel II, insbesondere der Formel II1.

Der Anteil der Verbindungen der Formel II in der flüssigkristallinen Mischung beträgt vorzugsweise 5-30 Gew. %, insbesondere 8-20 Gew.%.

Die Verbindungen der Formeln I1 und 15 mit einer dielektrischen Anisotropie von > 1,5 sind der oben definierten Komponente A zuzuordnen. Die unpolaren Verbindungen der Formel II mit einer dielektrischen Anisotropie von -1,5 bis +1,5 sind der oben definierten Komponente B zuzuordnen.

Die Verwendung von Verbindungen der Formel I führt in den erfindungsgemäßen Flüssigkristallmischungen zu besonders niedrigen Werten der Rotationsviskosität und zuTN- und STN-Anzeigen mit einer hohen Steilheit und schnellen Schaltzeiten insbesondere bei niedrigen Temperaturen.

Die Komponente A enthält eine oder mehrere Verbindungen mit polarer Endgruppe der Formel I**R

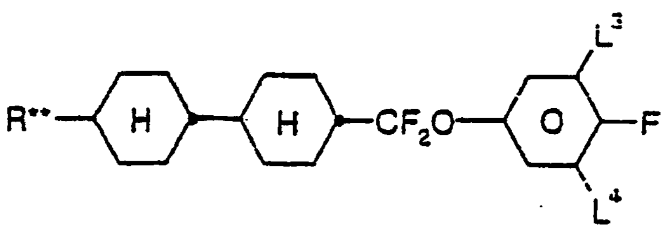

I**R

worin R** eine der für $R^1$ in Formel 1 angegebenen Bedeutungen besitzt und $L^3$ und $L^4$ jeweils unabhängig voneinander H oder F bedeuten. R** bedeutet in diesen Verbindungen besonders bevorzugt Alkyl, Alkenyl oder Alkoxy mit bis zu 8 C-Atomen.

Die Komponente A enthält neben einer oder mehreren Verbindungen der Formel I vorzugsweise eine oder mehrere Cyanoverbindungen der folgenden Formeln IIIa bis IIIj,

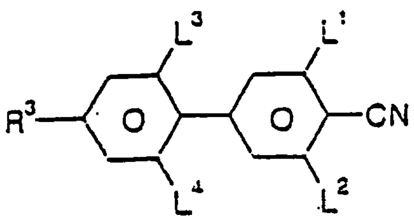

IIIa

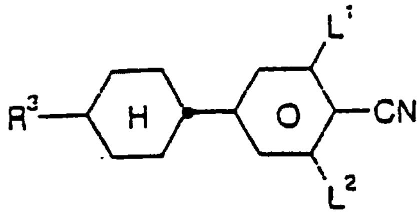

IIIb

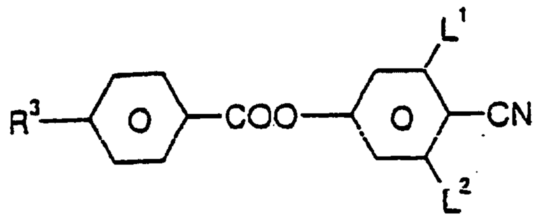

IIIc

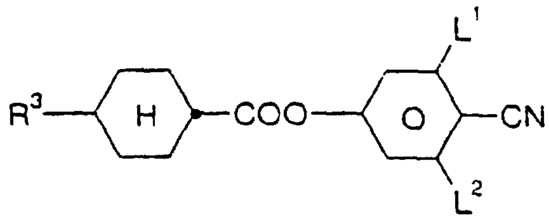

IIId

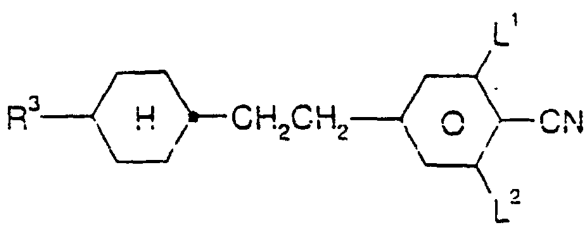

IIIe

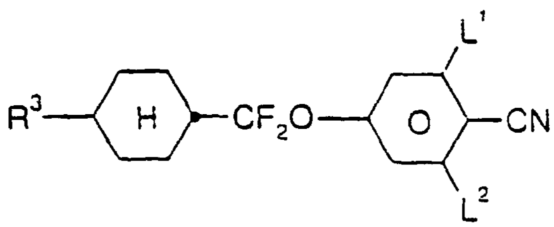

IIIf

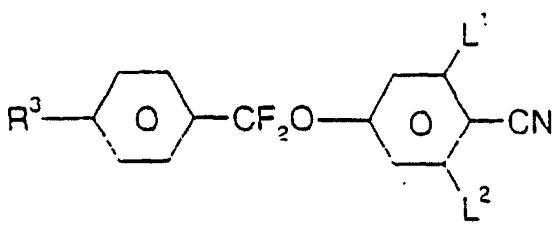

IIIg

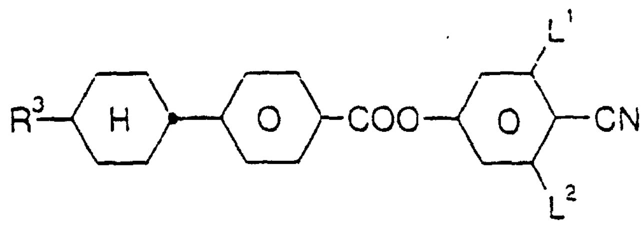

IIIh

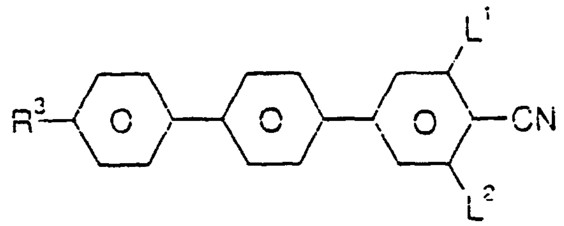

IIIi

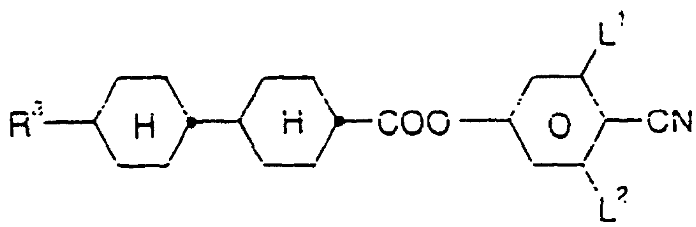

IIIj

worin $R^3$ eine der in Formel I für $R^1$ angegebenen Bedeutungen besitzt und $L^1$ bis $L^4$ jeweils unabhängig voneinander H oder F bedeuten. $R^3$ bedeutet in diesen Verbindungen besonders bevorzugt Alkyl, Alkenyl oder Alkoxy mit bis zu 8 C-Atomen.

Besonders bevorzugt sind Mischungen, die eine oder mehrere Verbindungen der Formeln IIIb, IIIc und IIIf, insbesondere solche, worin $L^1$ und/oder $L^2$ F bedeuten, enthalten. Insbesondere bevorzugt sind Verbindungen der Formeln

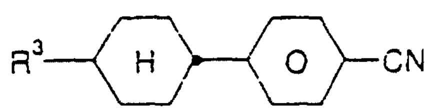

III*a

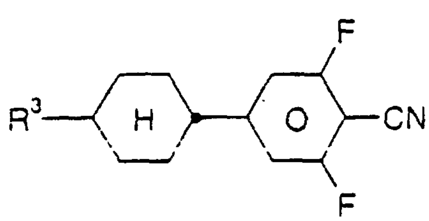

III*b

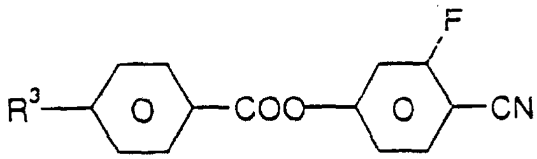

III*c

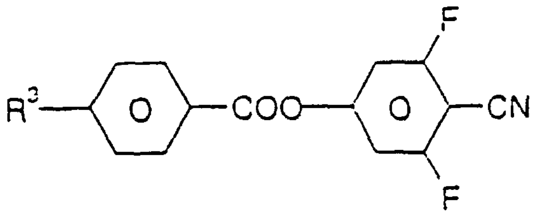

III*d

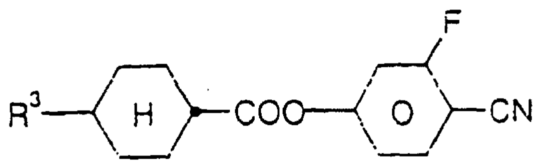

III*e

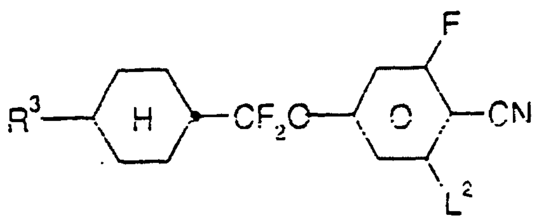

$L^2$ = H oder F

III*f

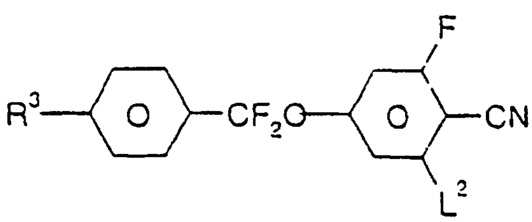

$L^2$ = H oder F

III*g

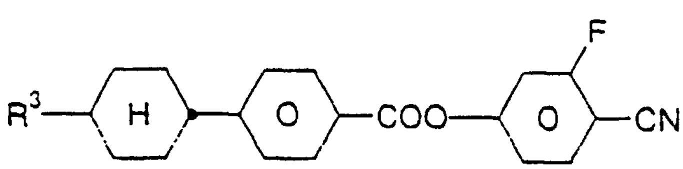

III*h

Weiterhin bevorzugt sind Verbindungen der Formel

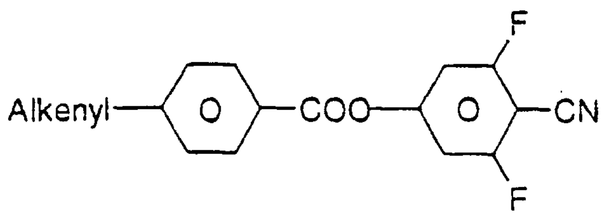

III*i

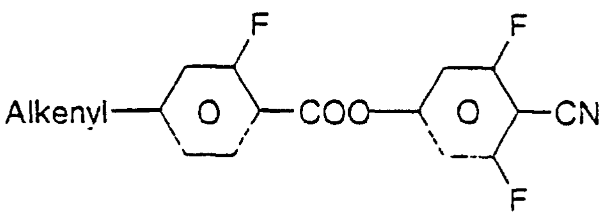

III*j

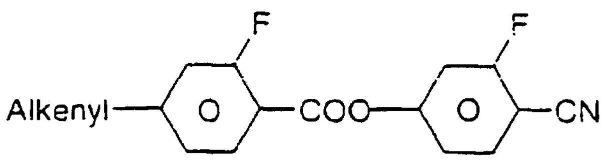

III*k

wobei Alkenyl vorzugsweise 1E- oder 3E-Alkenyl mit bis zu 6 C-Atomen bedeutet.

Besonders bevorzugt sind hier die Verbindungen der Formel

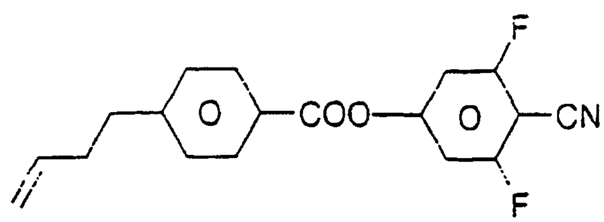

III*l

Die Komponente A enthält neben einer oder mehreren Verbindungen der Formel I und einer oder mehreren Verbindungen der Formel I**R vorzugsweise eine oder mehrere 3,4,5-Trifluorphenylverbindungen der Formeln I*A bis I*I

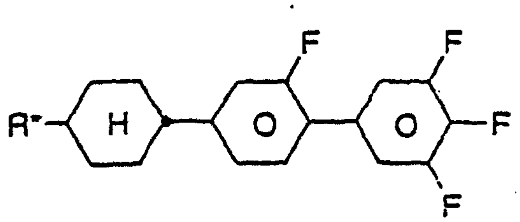

I*A

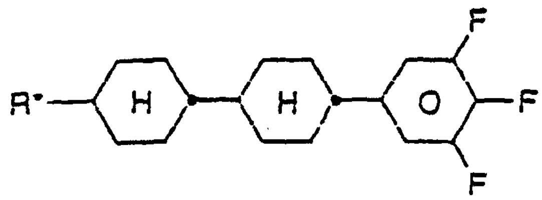

I*B

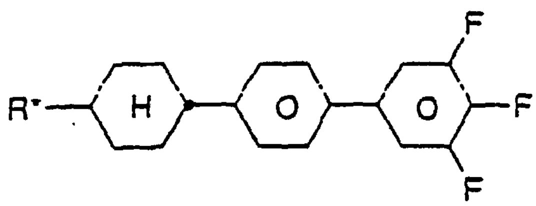

I*C

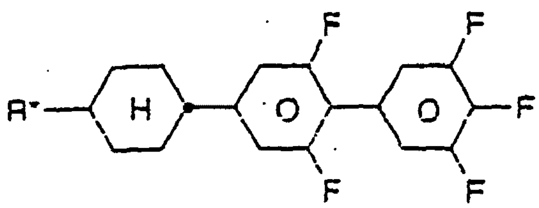

I*D

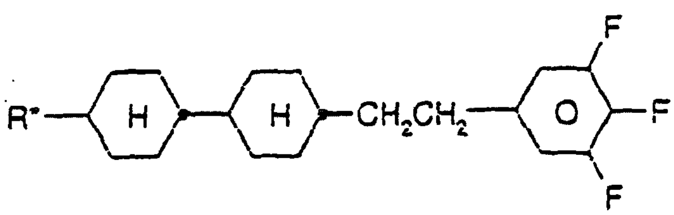

I*E

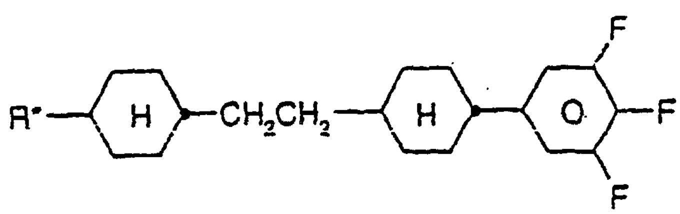

I*F

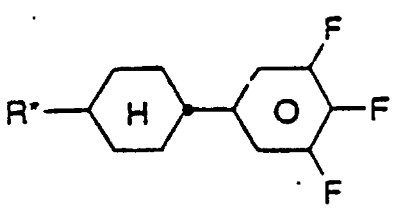

I*G

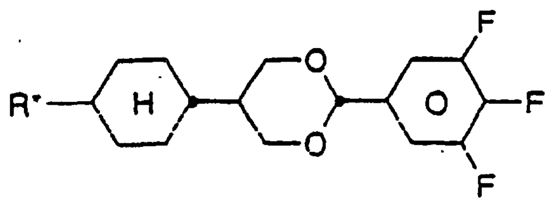

I*H

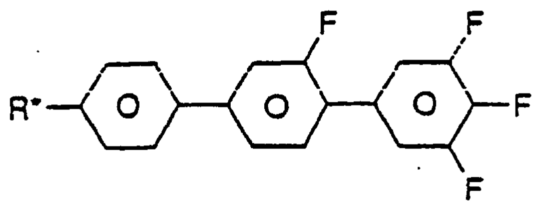

I*I

sowie gegebenenfalls eine oder mehrere Verbindungen mit polarer Endgruppe der Formeln I**A bis I**Q sowie der Formel I**S,

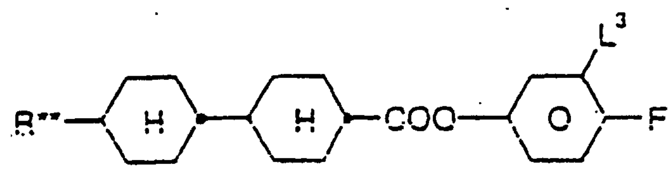

I**A

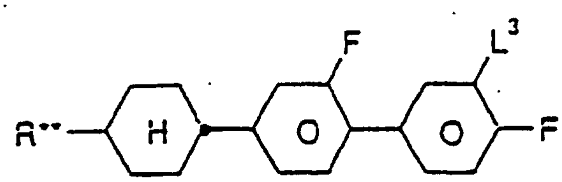

I**B

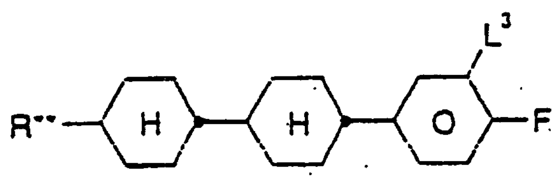

I**C

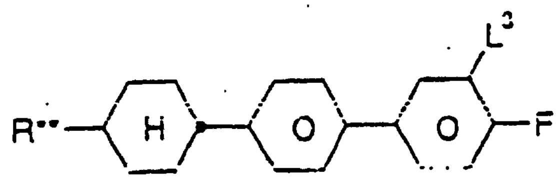

I**D

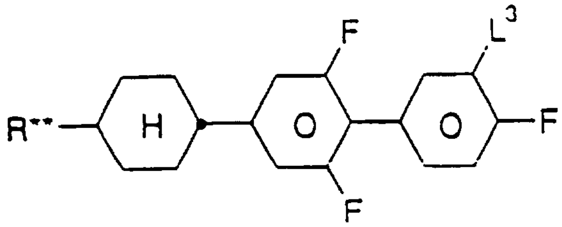

I**E

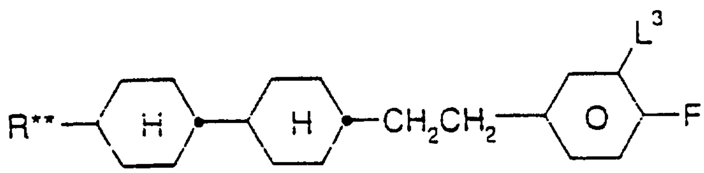

I**F

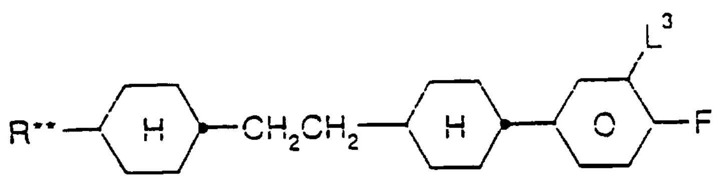

I**G

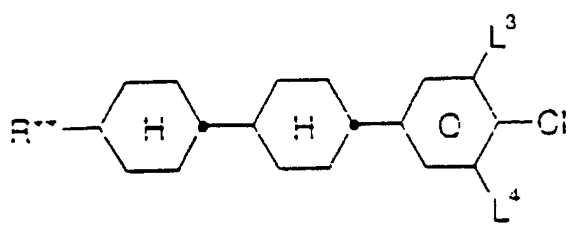

I**H

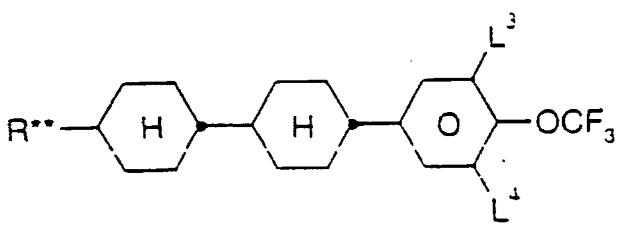

I**I

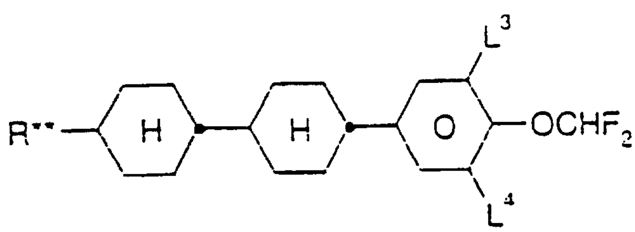

I**J

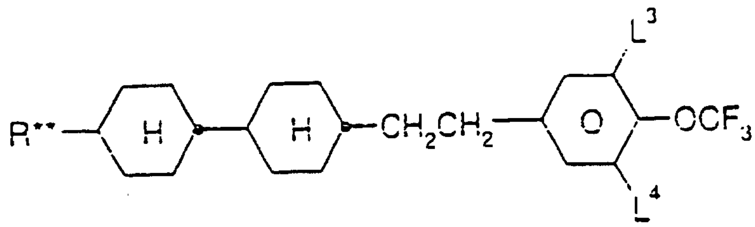

I**K

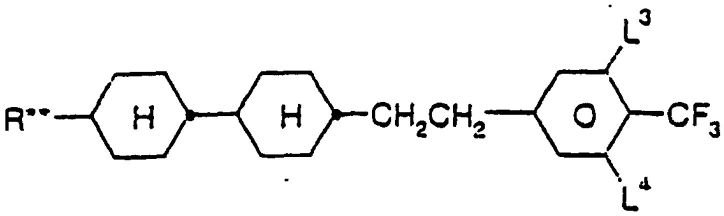

I**L

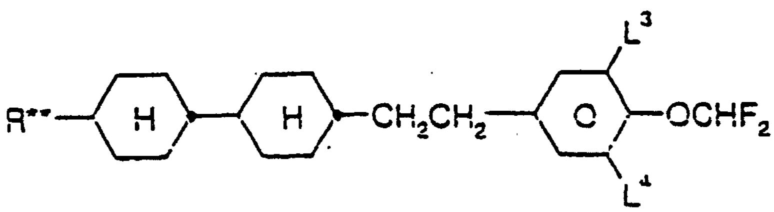

I**M

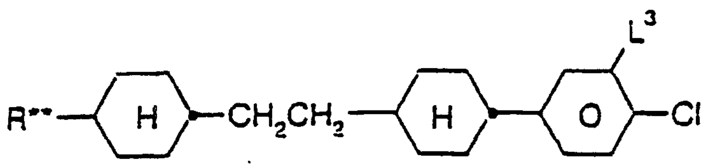

I**N

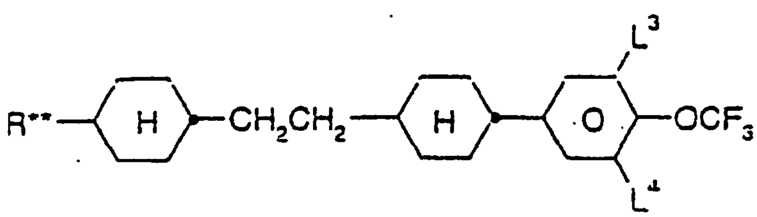

I**O

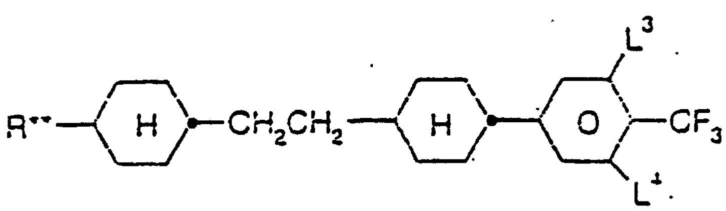

I**P

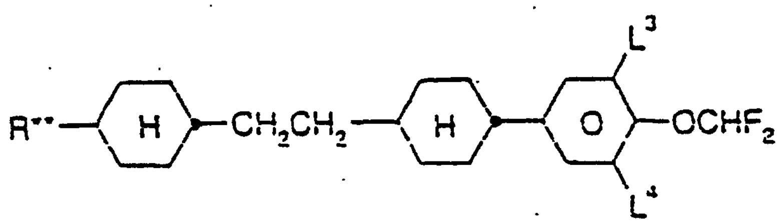

I**Q

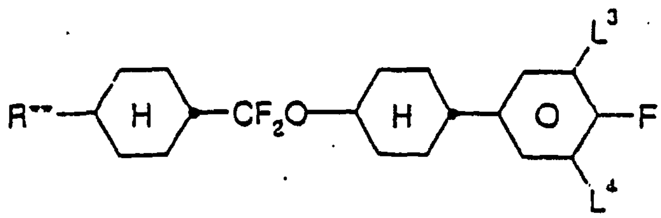

I**S

worin R** eine der für $R^1$ in Formel 1 angegebenen Bedeutungen besitzt und $L^3$ und $L^4$ jeweils unabhängig voneinander H oder F bedeuten. R** bedeutet in diesen Verbindungen besonders bevorzugt Alkyl, Alkenyl oder Alkoxy mit bis zu 8 C-Atomen.

Die einzelnen Verbindungen der Formeln I, I*A-I*H. I**A bis I**S. II und III bzw. deren Unterformein oder auch andere Verbindungen, die in den erfindungsgemäßen TN- und STN-Anzeigen verwendet werden können, sind entweder bekannt, oder sie können analog zu den bekannten Verbindungen hergestellt werden.

Die Verbindungen der Formel I besitzen niedrige Viskositäten, insbesondere niedrige Rotationsviskositäten, sowie niedrige Werte für das Verhältnis der elastischen Konstanten $K_{33}/K_{11}$, und führen daher zu in den erfindungsgemäßen Anzeigen zu kurzen Schaltzeiten, während die Anwesenheit von Verbindungen der Formel IIa mit hoher dielektrischer Anisotropie, insbesondere in erhöhten Konzentrationen, eine Verringerung der Schwellenspannung bewirkt.

Bevorzugte Flüssigkristallmischungen enthalten eine oder mehrere Verbindungen der Komponente A vorzugsweise in einem Anteil von 15 % bis 75 %, besonders bevorzugt von 20 % bis 65 %. Diese Verbindungen besitzen eine dielektrische Anisotropie $\Delta\varepsilon \geq +3$, insbesondere $\Delta\varepsilon \geq +8$. besonders bevorzugt $\Delta\varepsilon \geq +12$.

Weitere bevorzugte Mischungen enthalten

- eine oder mehrere, insbesondere ein oder zwei bis vier Verbindungen der Formel I,
- eine oder zwei Verbindungen der Formeln I1,
- eine oder mehrere, insbesondere eine oder zwei Verbindungen der Formel II,
- eine oder mehrere, insbesondere zwei bis fünf Verbindungen der Formel IIIb, IIIc, worin $L^1$ und $L^2$ Fluor bedeuten,
- keine Verbindung der Formel IIIb, worin $L^1$ und $L^2$ H bedeuten.

Bevorzugte Flüssigkristallmischungen enthalten eine oder mehrere Verbindungen der Komponente B, vorzugsweise 25 bis 85 %. Die Verbindungen der Gruppe B zeichnen sich insbesondere durch ihre niedrigen Werte für die Rotationsviskosität $\gamma_1$ aus.

Die Komponente B enthält neben einer oder mehreren Verbindungen der Formel II vorzugsweise eine oder mehrere Verbindungen ausgewählt aus der Gruppe bestehend aus den Zweiringverbindungen der folgenden Formeln IV1 bis IV9

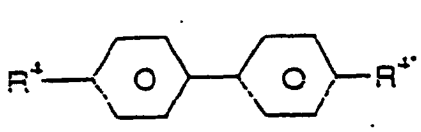

IV1

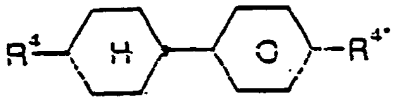

IV2

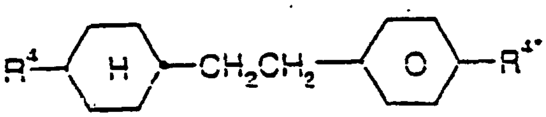

IV3

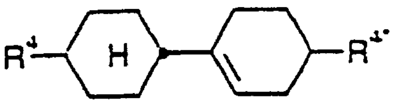

IV4

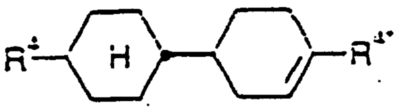

IV5

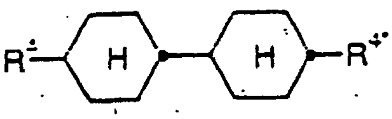

IV6

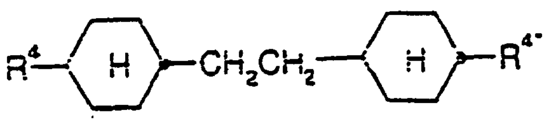

IV7

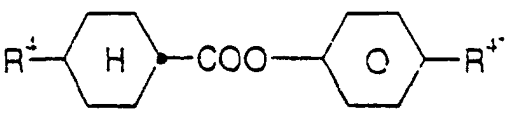

IV8

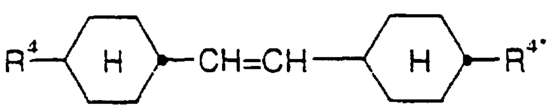

IV9

und/oder eine oder mehrere Verbindungen ausgewählt aus der Gruppe bestehend aus den Dreiringverbindungen den Formeln IV10 bis IV28,

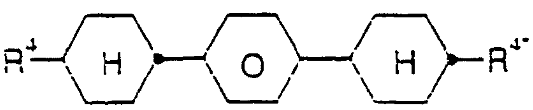

IV10

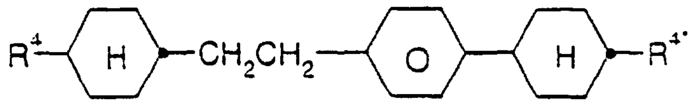

IV11

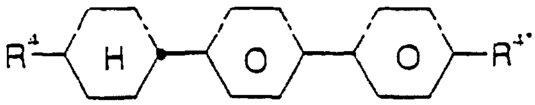

IV12

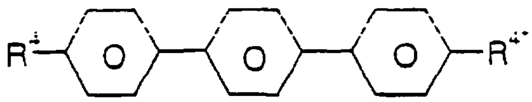

IV13

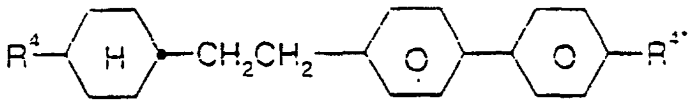

IV14

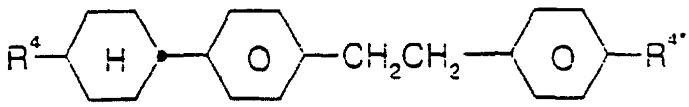

IV15

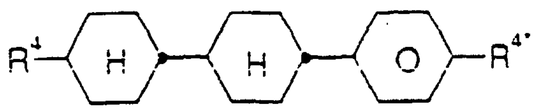

IV16

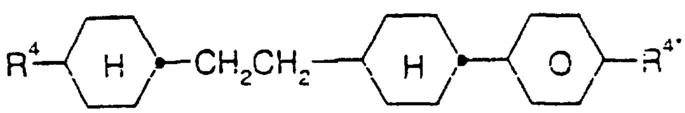

IV17

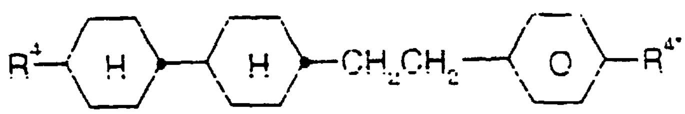

IV18

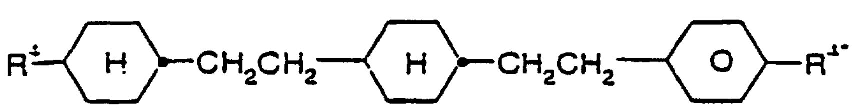

IV19

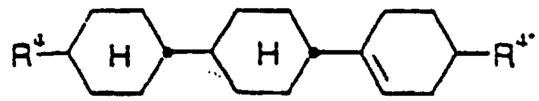 IV20

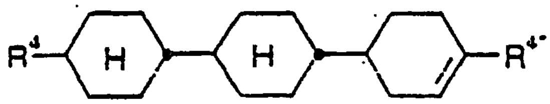 IV21

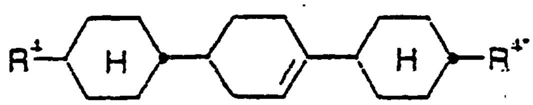 IV22

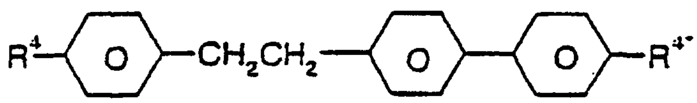 IV23

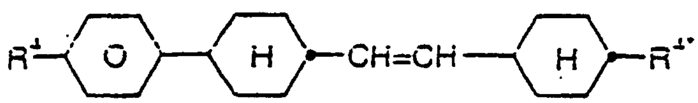 IV24

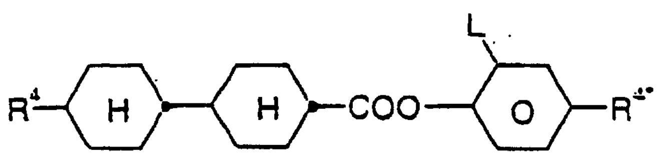 IV25

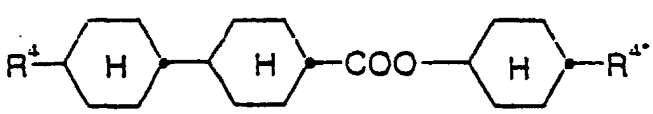 IV26

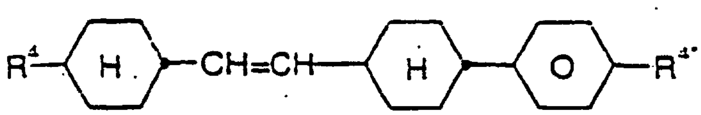 IV27

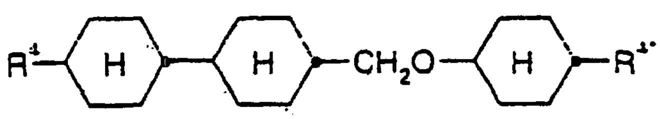 IV28

und/oder eine oder mehrere Verbindungen ausgewählt aus der Gruppe bestehend aus den Vierringverbindungen den Formeln IV29 bis IV35

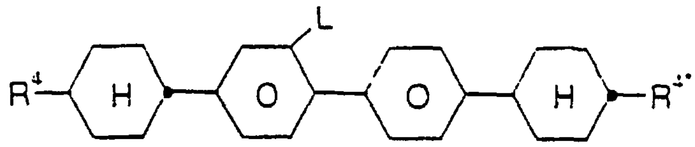

IV29

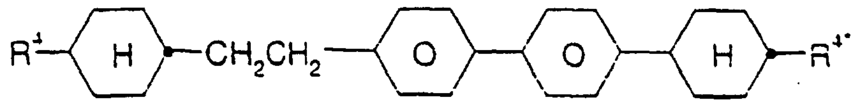

IV30

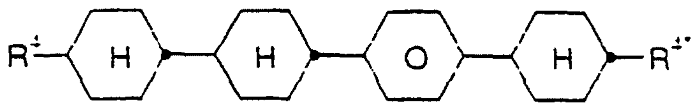

IV31

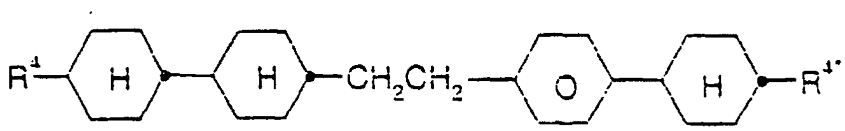

IV32

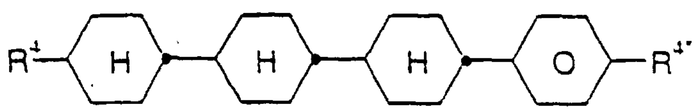

IV33

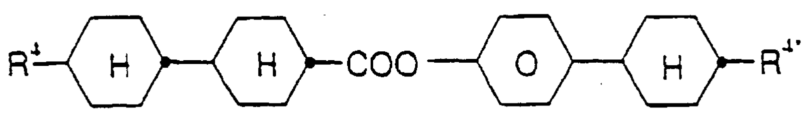

IV34

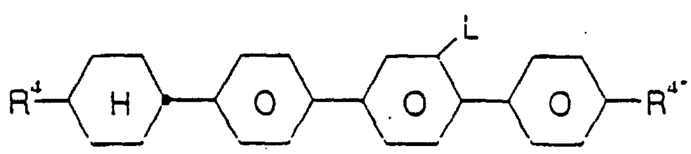

IV35

worin $R^4$ und $R^{4*}$ die für $R^1$ in Formel I angegebenen Bedeutungen haben, L H oder F bedeutet, und die 1,4-Phenylenringe jeweils unabhängig voneinander auch ein- oder mehrfach durch Fluor substituiert sein können.

Besonders bevorzugt sind Verbindungen der Formeln IV29 bis IV35, worin $R^4$ Alkyl und $R^{4*}$ Alkyl oder Alkoxy, insbesondere Alkoxy, jeweils mit 1 bis 7 C-Atomen, bedeutet. Ferner bevorzugt sind Verbindungen der Formel IV28 und IV34, worin L F bedeutet.

$R^4$ und $R^{4*}$ in den Verbindungen der Formeln IV1 bis IV35 bedeuten besonders bevorzugt geradkettiges Alkyl oder Alkoxy mit 1 bis 12 C-Atomen. Bevorzugte Flüssigkristallmischungen enthalten ein, zwei, drei oder vier Verbindungen der Formeln IV27 und/oder IV28.

Bevorzugte Verbindungen der Formel IV27 sind

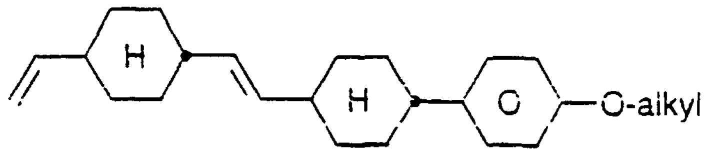

IV27a

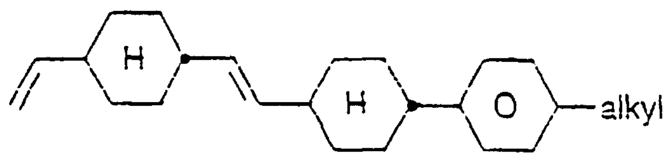

IV27b

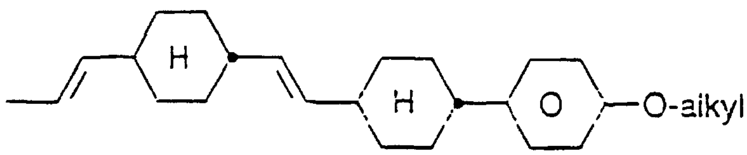

IV27c

Vorzugsweise enthalten erfindungsgemäße Mischungen mindestens eine Verbindung der Formeln IV27a, IV27b und/oder IV27c. Insbesondere enthalten die Mischungen mindestens zwei Verbindungen der Vinylverbindungen IV27a bis IV27c.

Die flüssigkristallinen Mischungen enthalten gegebenenfalls eine optisch aktive Komponente C in einer Menge, dass das Verhältnis zwischen Schichtdicke (Abstand der Trägerplatten) und natürlicher Ganghöhe der chiralen nematischen Flüssigkristallmischung größer 0,2 ist. Für die Komponente stehen dem Fachmann eine Vielzahl, zum Teil kommerziell erhältlicher chiraier Dotierstoffe zur Verfügung z.B. wie Cholesterylnonanoat (CN), S-811 der Merck KGaA. Darmstadt und CB15 (BDH, Poole, UK). Die Wahl der Dotierstoffe ist an sich nicht kritisch.

Der Anteil der Verbindungen der Komponente C beträgt vorzugsweise 0 bis 10 %, insbesondere 0 bis 5 %, besonders bevorzugt 0 bis 3 %.

Die erfindungsgemäßen Mischungen können auch gegebenenfalls bis zu 20 % einer oder mehrerer Verbindungen mit einer dielektrischen Anisotropie von weniger als -2 (Komponente D) enthalten.

Falls die Mischungen Verbindungen der Komponente D enthalten, so sind dies vorzugsweise eine oder mehrere Verbindungen mit dem Strukturelement 2,3-Difluor-1,4-phenylen, z.B. Verbindungen gemäß DE-OS 38 07 801, 38 07 861, 38 07 863, 38 07 864 oder 38 07 908. Besonders bevorzugt sind Tolane mit diesem Strukturelement gemäß der Internationalen Patentanmeldung PCT/DE 88/00133.

Weitere bekannte Verbindungen der Komponente D sind z.B. Derivate der 2,3-Dicyanhydrochinone oder Cyclohexanderivate mit dem Strukturelement

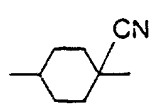 oder 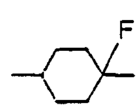

gemäß DE-OS 32 31 707 bzw. DE-OS 34 07 013.

Vorzugsweise enthalten die erfindungsgemäßen Flüssigkristallanzeigen keine Verbindungen der Komponente D.

Weitere bevorzugte Ausführungsformen beziehen sich auf erfindungsgemäßen Flüssigkristallmischungen, welche

- zusätzlich eine oder mehrere, besonders bevorzugt eine, zwei oder drei, heterocyclische Verbindungen der Formel Va und/oder Vb enthalten

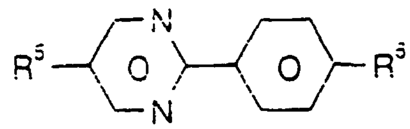

Va

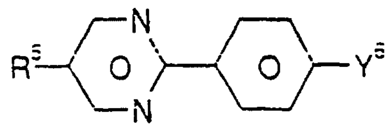

Vb

worin

$R^5$ und $R^6$ unabhängig voneinander Alkyl mit 1 bis 7 C-Atomen, und

$Y^6$ F oder Cl

bedeuten,

Der Anteil der Verbindungen aus der Gruppe enthaltend Va und Vb ist vorzugsweise 2 bis 35 %, insbesondere 5 bis 20 %.

- zusätzlich eine oder mehrere, besonders bevorzugt eine, zwei oder drei Tolan-Verbindungen der Formeln T2a und/oder T2b enthalten,

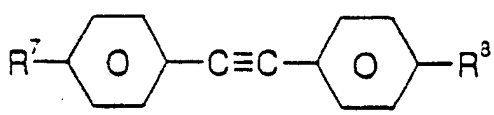

T2a

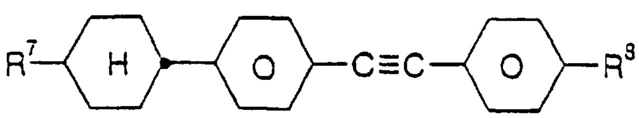

T2b

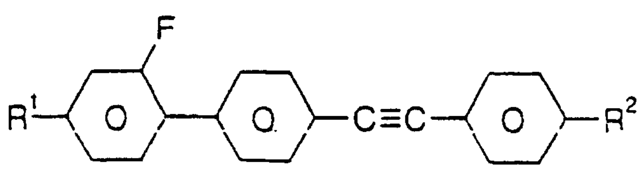

T2c

worin $R^7$ und $R^8$ die unabhängig voneinander, die für $R^1$ angegebene Bedeutung besitzen.

Der Anteil der Verbindungen aus der Gruppe enthaltend T2a und T2b ist vorzugsweise 0 bis 20 %, insbesondere 0 bis 12 %.

Der Ausdruck "Alkenyl" in der Bedeutung von $R^1$, $R^2$, $R^{2*}$, $R^4$, $R^{4*}$, $R^5$, $R^6$, $R^{6*}$ und $R^7$ umfasst geradkettige und verzweigte Alkenylgruppen, insbesondere die geradkettigen Gruppen. Besonders bevorzugte Alkenylgruppen sind $C_2$-$C_7$-1E-Alkenyl, $C_4$-$C_7$-3E-Alkenyl, $C_5$-$C_7$-4E-Alkenyl, $C_6$-$C_7$-5-Alkenyl, und $C_7$-6-Alkenyl, insbesondere $C_2$-$C_7$-

1E-Alkenyl, $C_4$-$C_7$-3E-Alkenyl und $C_5$-$C_7$-4-Alkenyl.

Beispiele bevorzugter Alkenylgruppen sind Vinyl, 1E-Propenyl, 1E-Butenyl, 1E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl. 4Z-Heptenyl, 5-Hexenyl, 6-Heptenyi und dergleichen. Gruppen mit bis zu 5 Kohlenstoffatomen sind im allgemeinen bevorzugt.

In besonders bevorzugten Ausführungsformen enthalten die Mischungen

- eine oder mehrere Verbindungen der folgenden Formeln

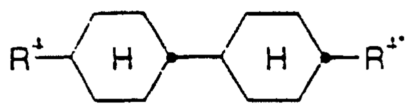

IV6

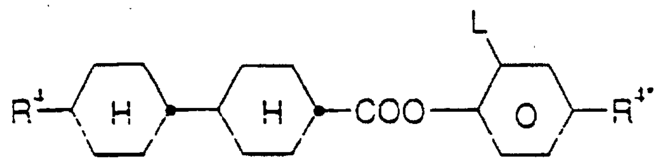

IV25

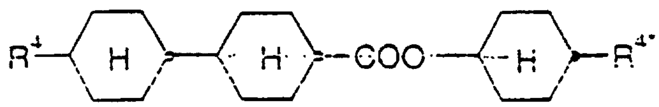

IV26

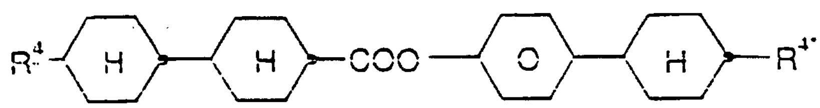

IV30

worin $R^4$, $R^{4*}$ und L die oben angegebenen Bedeutungen und L in Formel IV25 besonders bevorzugt F bedeutet: Der Anteil dieser Verbindungen in den Flüssigkristallmischungen liegt vorzugsweise bei 10 bis 45 %, insbesondere bei 15 bis 40 %,

- wenigstens zwei Verbindungen der Formel IIIc, und gegebenenfalls zusätzlich wenigstens eine Verbindung der Formel IIIb, worin $L^1$ und $L^2$ F bedeuten. Der Anteil dieser Verbindungen in den Flüssigkristallmischungen liegt vorzugsweise bei 7 bis 50 %, insbesondere bei 10 bis 40 %:

- wenigstens eine Verbindung der Formeln VIa bis VIe,

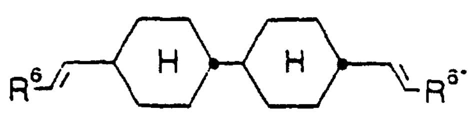

VIa

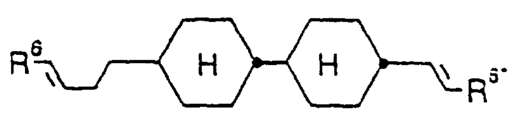

VIb

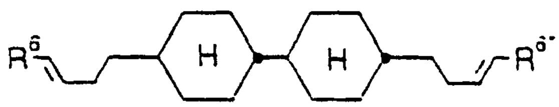

VIc

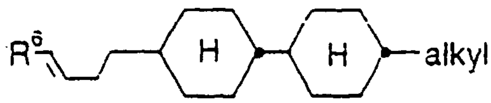

VId

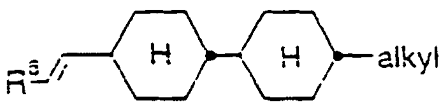

VIe

worin $R^6$ und $R^{6*}$ jeweils unabhängig voneinander H, $CH_3$, $C_2H_5$ oder n-$C_3H_7$ und Alkyl eine geradkettige Alkylgruppe mit 1 bis 7 C-Atomen bedeuten, vorzugsweise n-Propyl und n-Pentyl, besonders bevorzugt jeweils wenigstens eine Verbindung der Formel VIa und VIb

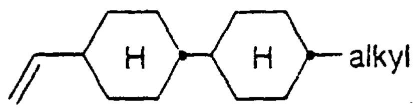

VIa1

und

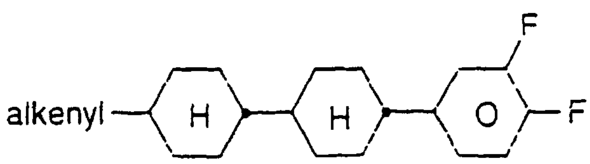

VIb

worin Alkenyl eine Alkenylgruppe mit 2 bis 7 C-Atomen und Alkyl eine Alkylgruppe mit 1 bis 7 C-Atomen bedeutet.

Die erfindungsgemäßen Mischungen zeichnen sich insbesondere beim Einsatz in TN- und STN-Anzeigen mit hohen Schichtdicken durch sehr niedrige Summenschaltzeiten aus ($t_{ges} = t_{on} + t_{crt}$).

Die in den erfindungsgemäßen TN- und STN-Zellen verwendeten Flüssigkristallmischungen sind dielektrisch positiv mit $\Delta\varepsilon \geq 1$. Besonders bevorzugt sind Flüssigkristallmischungen mit $\Delta\varepsilon \geq 3$, insbesondere mit $\Delta\varepsilon \geq 5$.

Die erfindungsgemäßen Flüssigkristallmischungen weisen günstige Werte für die Schwellenspannung $V_{10/0/20}$ und für die Rotationsviskosität $\gamma_1$ auf. Ist der Wert für den optischen Wegunterschied $d \cdot \Delta n$ vorgegeben, wird der Wert für die Schichtdicke d durch die optische Anisotropie $\Delta n$ bestimmt. Insbesondere bei relativ hohen Werten für $d \cdot \Delta n$ ist i.a. die Verwendung erfindungsgemäßer Flüssigkristallmischungen mit einem relativ hohen Wert für die optische Anisotropie bevorzugt, da dann der Wert für d relativ klein gewählt werden kann, was zu günstigeren Werten für die Schaltzeiten führt. Aber auch solche erfindungsgemäßen Flüssigkristallanzeigen, die erfindungsgemäße Flüssigkristallmischungen mit kleineren Werten für $\Delta n$ enthalten, sind durch vorteilhafte Werte für die Schaltzeiten gekennzeichnet.

Die erfindungsgemäßen Flüssigkristallmischungen sind weiter durch vorteilhafte Werte für die Steilheit der elektrooptischen Kennlinie gekennzeichnet, und können insbesondere bei Temperaturen über 20 °C mit hohen Multiplexraten betrieben werden. Darüber hinaus weisen die erfindungsgemäßen Flüssigkristallmischungen eine hohe Stabilität und günstige Werte für den elektrischen Widerstand und die Frequenzabhängigkeit der Schwellenspannung auf. Die erfindungsgemäßen Flüssigkristallanzeigen weisen einen großen Arbeitstemperaturbereich und eine gute Winkelabhängigkeit des Kontrastes auf.

Der Aufbau der erfindungsgemäßen Flüssigkristall-Anzeigeelemente aus Polarisatoren, Elektrodengrundplatten und Elektroden mit einer solchen Oberflächenbehandlung, dass die Vorzugsorientierung (Direktor) der jeweils daran angrenzenden Flüssigkristall-Moleküle von der einen zur anderen Elektrode gewöhnlich um betragsmäßig 160° bis 720° gegeneinander verdreht ist, entspricht der für derartige Anzeigeelemente üblichen Bauweise. Dabei ist der Begriff der üblichen Bauweise hier weit gefasst und umfasst auch alle Abwandlungen und Modifikationen der TN- und STN-Zelle, insbesondere auch Matrix-Anzeigeelemente sowie die zusätzliche Magnete enthaltenden Anzeigeelemente.

Der Oberflächentiltwinkel an den beiden Trägerplatten kann gleich oder verschieden sein. Gleiche Tiltwinkel sind bevorzugt. Bevorzugte TN-Anzeigen weisen Anstellwinkel zwischen der Längsachse der Moleküle an der Oberfläche der Trägerplatten und den Trägerplatten von 0° bis 7°, vorzugsweise 0,01° bis 5°, insbesondere 0,1 bis 2° auf. In den STN-Anzeigen ist der Anstellwinkel bei 1° bis 30°, vorzugsweise bei 1° bis 12° und insbesondere bei 3° bis 10°.

Der Verdrillungswinkel der TN-Mischung in der Zelle liegt dem Betrag nach zwischen 22,5° und 170°, vorzugsweise zwischen 45° und 130° und insbesondere zwischen 80° und 115°. Der Verdrillungswinkel der STN-Mischung in der Zelle von Orientierungsschicht zu Orientierungschicht liegt dem Betrag nach zwischen 100° und 600°, vorzugsweise zwischen 170° und 300° und insbesondere zwischen 180° und 270°.

Die Herstellung der erfindungsgemäß verwendbaren Flüssigkristallmischungen erfolgt in an sich üblicher Weise. In der Regel wird die gewünschte Menge der in geringerer Menge verwendeten Komponenten in der den Hauptbestandteil ausmachenden Komponenten gelöst, zweckmäßig bei erhöhter Temperatur. Es ist auch möglich, Lösungen der Komponenten in einem organischen Lösungsmittel, z.B. in Aceton, Chloroform oder Methanol, zu mischen und das Lösungsmittel nach Durchmischung wieder zu entfernen, beispielsweise durch Destillation.

Die Dielektrika können auch weitere, dem Fachmann bekannte und in der Literatur beschriebene Zusätze enthalten. Beispielsweise können 0-15 % pleochroitische Farbstoffe zugesetzt werden.

in der vorliegenden Anmeldung und in den folgenden Beispielen sind die Strukturen der Flüssigkristallverbindungen durch Acronyme angegeben, wobei die Transformation in chemische Formeln gemäß folgender Tabellen A und B erfolgt. Alle Reste $C_nH_{2n+1}$ und $C_mH_{2m+1}$ sind geradkettige Alkylreste mit n bzw. m C-Atomen. Die Alkenylreste weisen die trans-Konfiguration auf. Die Codierung gemäß Tabelle B versteht sich von selbst. In Tabelle A ist nur das Acronym für den Grundkörper angegeben. Im Einzelfall folgt getrennt vom Acronym für den Grundkörper mit einem Strich der in der untenstehenden Tabelle angegebene Code für die Substituenten $R^1$, $R^2$, $L^1$, $L^2$ und $L^3$.

Die TN- und STN-Displays enthalten vorzugsweise flüssigkristalline Mischungen, die sich aus ein oder mehreren Verbindungen aus den Tabellen A und B zusammensetzen.

| Code für $R^1$, $R^2$, $L^1$, $L^2$, $L^3$ | $R^1$ | $R^2$ | $L^1$ | $L^2$ | $L^3$ |
|---|---|---|---|---|---|
| nm | $C_nH_{2n+1}$ | $C_mH_{2m+1}$ | H | H | H |
| nOm | $OC_nH_{2n+1}$ | $C_mH_{2m+1}$ | H | H | H |
| nO.m | $C_nH_{2n+1}$ | $OC_mH_{2m+1}$ | H | H | H |
| n | $C_nH_{2n+1}$ | CN | H | H | H |
| nN.F | $C_nH_{2n+1}$ | CN | H | H | F |
| nN.F.F | $C_nH_{2n+1}$ | CN | H | F | F |
| nF | $C_nH_{2n+1}$ | F | H | H | H |
| nOF | $OC_nH_{2n+1}$ | F | H | H | H |
| nF.F | $C_nH_{2n+1}$ | F | H | H | F |
| nmF | $C_nH_{2n+1}$ | $C_mH_{2m-1}$ | F | H | H |
| $nOCF_3$ | $C_nH_{2n+1}$ | $OCF_3$ | H | H | H |
| n-Vm | $C_nH_{2n+1}$ | $-CH=CH-C_mH_{2m+1}$ | H | H | H |
| nV-Vm | $C_nH_{2n+1}-CH=CH-$ | $-CH=CH-C_mH_{2m+1}$ | H | H | H |

**Tabelle A:** ($L^1$, $L^2$, $L^3$ = H oder F)

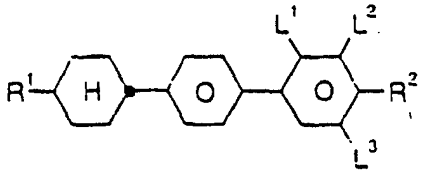

BCH

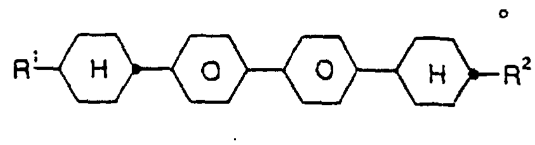

CBC

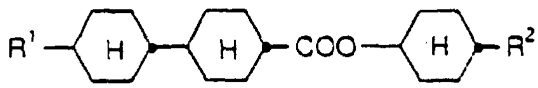

CH

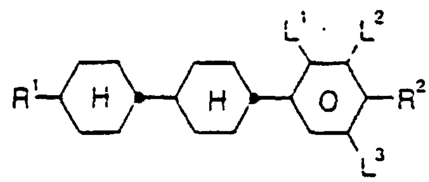

CCP

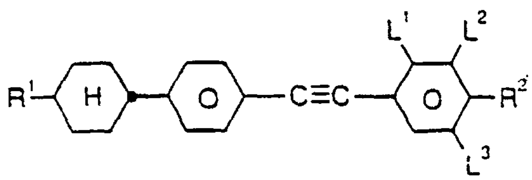

CPTP

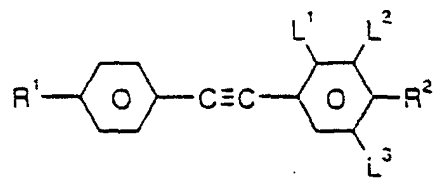

PTP

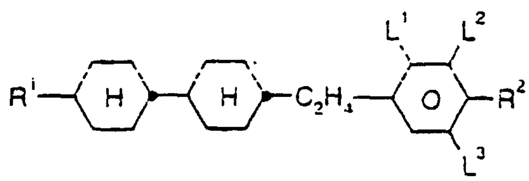

ECCP

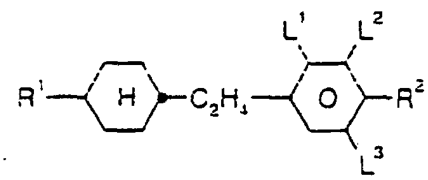

EPCH

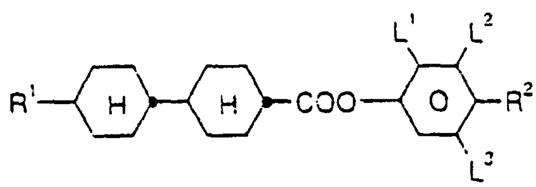

CP

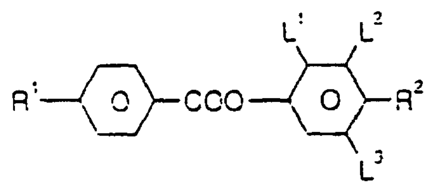

ME

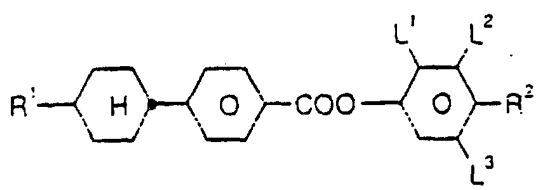

HP

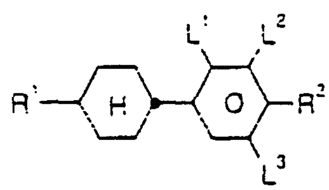

PCH

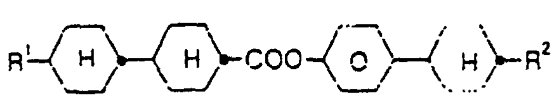

CCPC

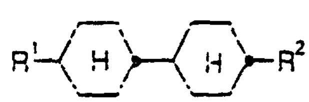

CCH

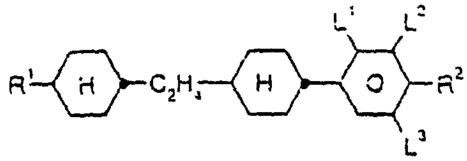

Tabelle B:

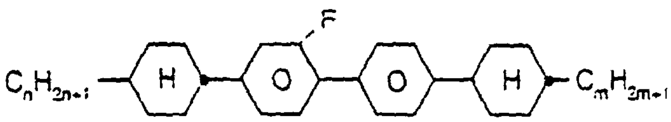

CBC-nmF

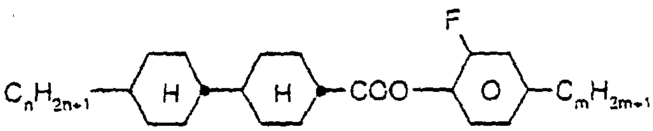

CP-nmF

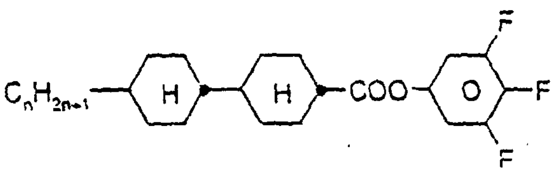

CCZU-n-F

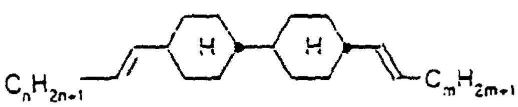

CC-nV-Vm

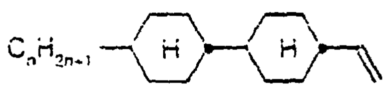

CC-n-V

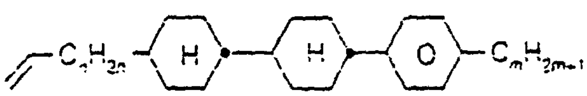

CCP-Vn-m

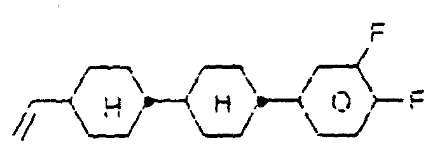

CCG-V-F

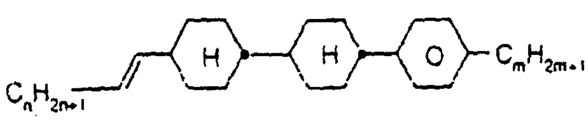

CCP-nV-m

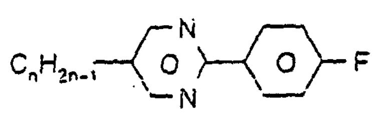

PYP-nF

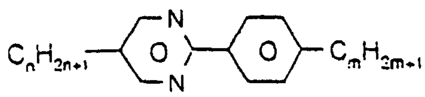

PYP-nm

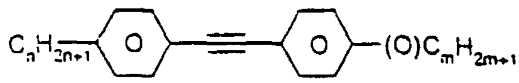

PTP-n(O)m

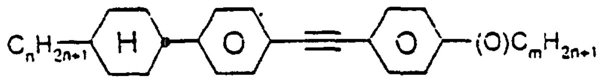

CPTP-n(O)m

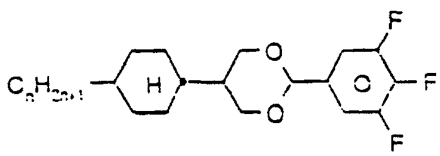

CDU-n-F

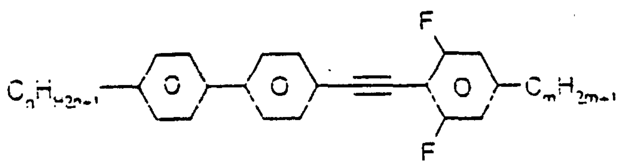

PPTUI-n-m

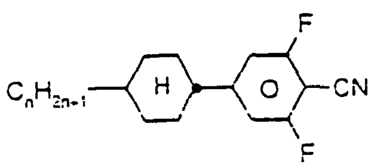

PCH-nN.F.F

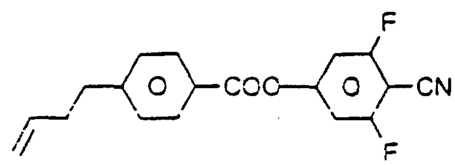

PZU-V2-N

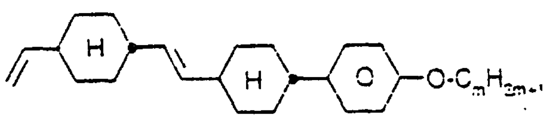

CVCP-V-Om

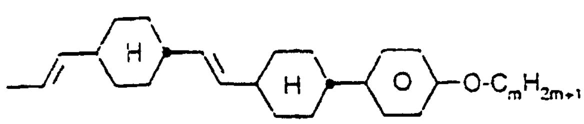

CVCP-1V-Om

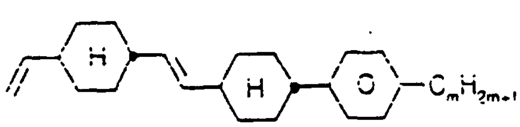

CVCP-V-m

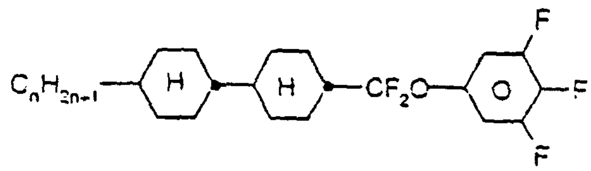

CCQU-n-F

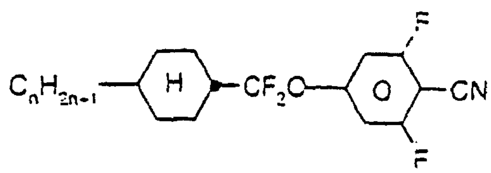

CQU-n-N

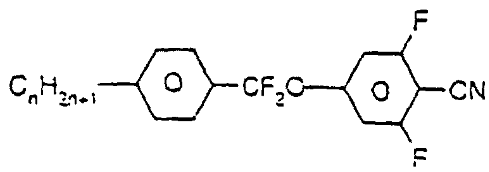

PQU-n-N

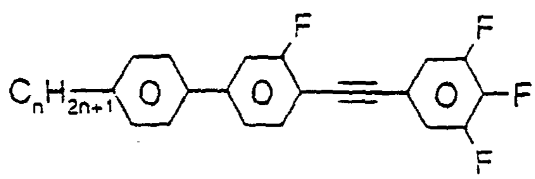

GPTU-n-F

**Tabelle C:**

In der Tabelle C werden mögliche Dotierstoffe angegeben, die in der Regel den erfindungsgemäßen Mischungen zugesetzt werden.

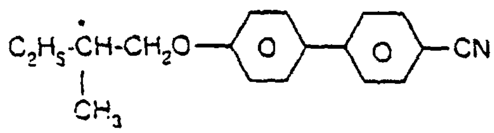

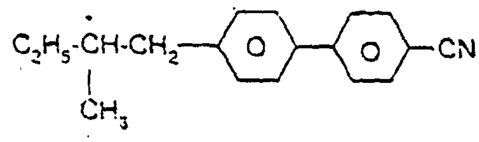

**C 15**

**CB 15**

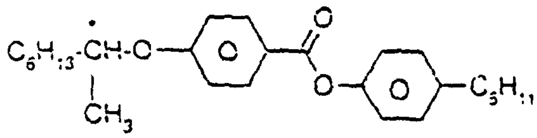

**CM 21**

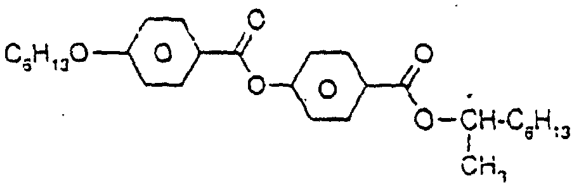

**R/S-811**

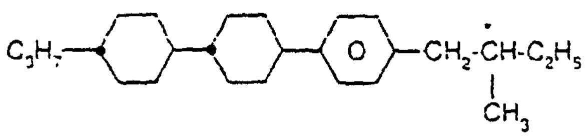

**CM 44**

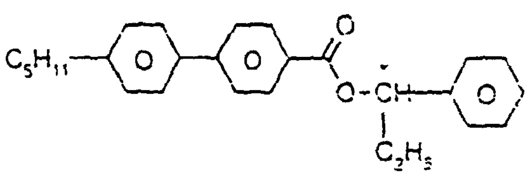

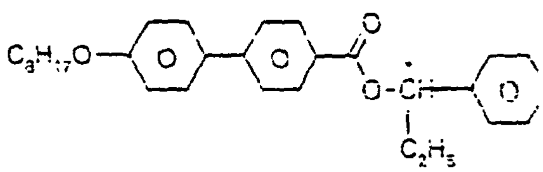

**CM 45**

**CM 47**

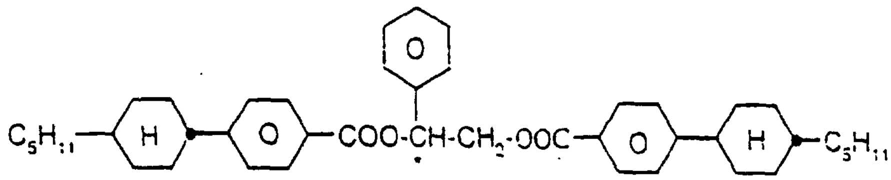

R/S-1011

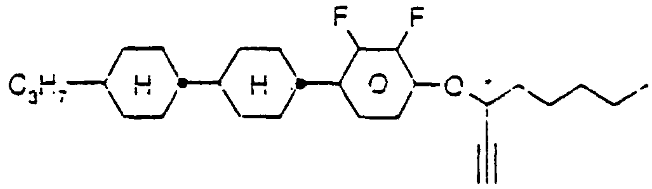

R/S-3011

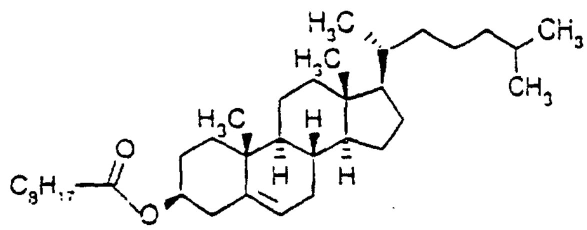

CN

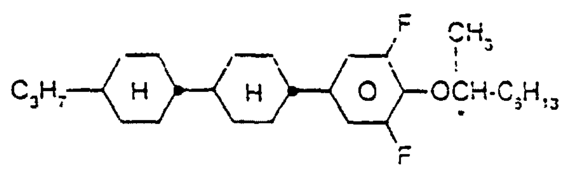

R/S-2011

Die folgenden Beispiele sollen die Erfindung erläutern, ohne sie zu begrenzen. Es bedeutet

| | |
|---|---|
| Klp. | Klärpunkt (Phasenübergangs-Temperatur nematisch-isotrop), |
| S-N | Phasenübergangs-Temperatur smektisch-nematisch, |
| Visk. | Fließviskosität ($mm^2/s$, soweit nicht anders angegeben, bei 20 °C), |
| $\Delta n$ | optische Anisotropie (589 nm, 20 °C), |
| $\Delta\varepsilon$ | dielektrische Anisotropie (1 kHz, 20 °C), |
| steep | Kennliniensteilheit = $(V_{90}/V_{10} - 1)$ 100 [%] |
| $V_{10}$ | Schwellenspannung = charakteristische Spannung bei einem relativen Kontrast von 10 %, |
| $V_{90}$ | charakteristische Spannung bei einem relativen Kontrast von 90 %, |
| $t_{ave}$ | $\frac{t_{on} + t_{off}}{2}$ (mittlere Schaltzeit), |
| $t_{on}$ | Zeit vom Einschalten bis zur Erreichung von 90 % des maximalen Kontrastes, |
| $t_{off}$ | Zeit vom Ausschalten bis zur Erreichung von 10 % des maximalen Kontrastes, |
| Mux | Multiplexrate, |
| $t_{store}$ | Tieftemperatur-Lagerstabilität in Stunden (- 20 °C, - 30 °C, - 40 °C) |

Vor- und nachstehend sind alle Temperaturen in °C angegeben. Die Prozentzahlen sind Gewichtsprozente. Alle Werte beziehen sich auf 20 °C, soweit nicht anders angegeben. Die Ansteuerung der Anzeigen erfolgt, soweit nicht anders angegeben, nicht multiplexiert. Die Verdrillung (twist) beträgt 240°, soweit nicht anders angegeben.

**Beispiele**

**Vergleichs-Beispiel 1**

| | | | |
|---|---|---|---|
| PCH-3N.F.F | 19,0 % | Klärpunkt [°C]: | +95 |
| ME2N.F | 6,5 % | Δε [589 nm; 20 °C]: | +0,1440 |
| ME3N.F | 6,5 % | Verdrillung [°]: | 240 |
| ME4N.F | 12,0 % | $V_{10}$ [V]: | 1,17 |
| CC-3-V1 | 5,0 % | | |
| CVCP-V-1 | 4,0 % | | |
| CVCP-V-01 | 4,5 % | | |
| CVCP-1V-01 | 4,5 % | | |
| CCZU-2-F | 4,0 % | | |
| CCZU-3-F | 10,0 % | | |
| PPTUI-3-2 | 10.0% | | |
| CBC-33F | 4,0 % | | |
| CCPC-33 | 5,0 % | | |
| CCPC-34 | 5,0 % | | |

**Vergleichs-Beispiel 2**

| | | | |
|---|---|---|---|
| PCH-3N.F.F | 19,0 % | Klärpunkt [°C]: | +96 |
| ME2N.F | 6,0 % | Δε [589 nm; 20 °C]: | +0,1434 |
| ME3N.F | 6,0 % | Verdrillung [°]: | 240 |
| PZU-V2-N | 11,0 % | $V_{10}$ [V]: | 1,15 |
| CC-3-V1 | 7,0 % | | |
| CCP-V-1 | 10,0 % | | |
| CVCP-V-01 | 4,0 % | | |
| CVCP-1V-01 | 4,0 % | | |
| CCZU-3-F | 10,0 % | | |
| PPTUI-3-2 | 10,0 % | | |
| CBC-33F | 3,0 % | | |
| CCPC-33 | 5,0 % | | |
| CCPC-34 | 5,0 % | | |

**Vergleichs-Beispiel 3**

| | | | |
|---|---|---|---|
| ME2N.F | 3,0 % | Klärpunkt [°C]: | +100 |
| ME3N.F | 3,0 % | Δε [589 nm; 20 °C]: | +0,1656 |
| ME4N.F | 8,0 % | Verdrillung [°]: | 90 |
| PCH-302 | 8,0 % | $V_{10}$ [V]: | 1,81 |
| CC-5-V | 10,0 % | | |
| PYP-5F | 8,0 % | | |

(fortgesetzt)

| | | | |
|---|---|---|---|
| PYP-32 | 4,0 % | | |
| BCH-2F.F | 6,0 % | | |
| 3CH-3F.F | 4,5 % | | |
| CCZU-3-F | 12.0% | | |
| CCPC-33 | 5,0 % | | |
| CCPC-34 | 4,0 % | | |
| CBC-33F | 3,0 % | | |
| CBC-53F | 3,0 % | | |
| PPTUI-3-2 | 8,5 % | | |
| PPTUI-3-4 | 10,0 % | | |

**Vergleichs-Beispiel 4**

| | | | |
|---|---|---|---|
| ME2N.F | 3,0 % | Klärpunkt [°C]: | +99 |
| ME3N.F | 3,0 % | Δε [589nm; 20 °C]: | +0,1639 |
| ME4N.F | 9,0 % | Verdrillung [°]: | 90 |
| PCH-302 | 6,0 % | $V_{10}$ [V]: | 1,74 |
| CC-5-V | 11,0 % | | |
| PYP-5F | 8.0 % | | |
| PYP-32 | 4,5 % | | |
| BCH-2F.F | 6,0 % | | |
| CCZU-2-F | 3,5 % | | |
| CCZU-3-F | 12,0 % | | |
| CCPC-33 | 5,0 % | | |
| CCPC-34 | 4,0 % | | |
| CBC-33F | 3,0 % | | |
| CBC-53F | 3,0 % | | |
| PPTUI-3-2 | 9,0 % | | |
| PPTUI-3-4 | 10,0 % | | |

**Vergleichs-Beispiel 5**

| | | | |
|---|---|---|---|
| PCH-3N.F.F | 19,0 % | Klärpunkt [°C]: | +96 |
| ME2N.F | 6,0 % | Δε [589 nm; 20 °C]: | +0,1404 |
| ME3N.F | 6,0 % | Verdrillung [°]: | 240 |
| PZU-V2-N | 7,0 % | $V_{10}$ [V]: | 1,33 |
| CC-3-V1 | 8,0 % | | |
| CCP-V-1 | 15,0 % | | |
| CCP-V2-1 | 11,0 % | | |
| CVCP-V-O1 | 4,0 % | | |
| CVCP-1V-O1 | 4,0 % | | |
| CCZU-3-F | 5,0 % | | |
| PPTUI-3-2 | 10,0 % | | |
| CCPC-33 | 5,0 % | | |

**Vergleichs-Beispiel 6**

| | | | |
|---|---|---|---|
| PCH-3N.F.F | 19,0 % | Klärpunkt [°C]: | +96, |
| ME2N.F | 6,0 % | $\Delta\varepsilon$ [589 nm; 20 °C]: | +0,1414 |
| ME3N.F | 6,0 % | Verdrillung [°]: | 240 |
| PZU-V2-N | 11,0 % | $V_{10}$ [V]: | 1,24 |
| CC-3-V1 | 7,0 % | | |
| CCP-V-1 | 13,0 % | | |
| CCP-V2-1 | 7,0% | | |
| CVCP-V-O1 | 4,5 % | | |
| CVCP-1 V-O1 | 4,5 % | | |
| CCZU-3-F | 3,0 % | | |
| PPTUI-3-2 | 9,0 %. | | |
| CCPC-33 | 5,0 % | | |
| CCPC-34 | 5,0 % | | |

**Patentansprüche**

**1.** Nematische Flüssigkristallmischung, **dadurch gekennzeichnet, daß** sie eine oder mehrere Verbindungen der Formel I

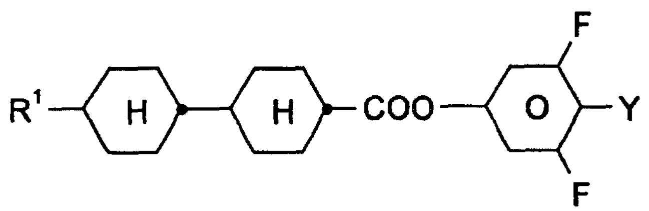

I

eine oder mehrere Verbindungen der Formel II

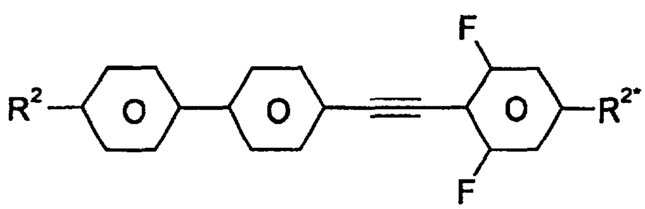

II

und eine oder mehrere Verbindungen der Formel I**R

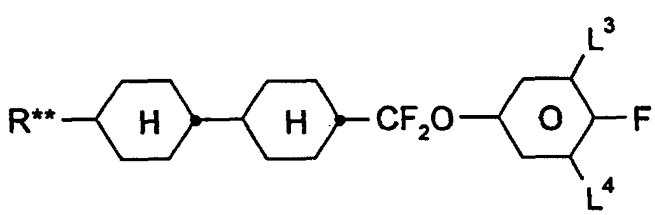

I**R

enthält,

worin die einzelnen Reste folgende Bedeutung besitzen:

| | |
|---|---|
| $R^1$, $R^2$, $R^{2*}$ und $R^{**}$ | jeweils unabhängig voneinander eine gegebenenfalls fluorierte Alkyl-, Alkoxy-, Alkenyl- oder Alkenyloxygruppe mit bis zu 12 C-Atomen, wobei auch eine oder zwei nicht benachbarte $CH_2$-Gruppen durch -O-, -CH=CH-, -CO-, -OCO- oder -COO- so ersetzt sein können, daß O-Atome nicht direkt miteinander verknüpft sind, |
| Y | F, Cl, $OCF_3$, $OCHF_2$ oder $OCHFCF_3$, und |
| $L^3$ und $L^4$ | jeweils unabhängig voneinander H oder F. |

2. Nematische Flüssigkristallmischung nach Anspruch 1, **dadurch gekennzeichnet, dass** Y in Formel I Fluor bedeutet.

3. Nematische Flüssigkristallmischung nach Anspruch 1 oder 2, **dadurch gekennzeichnet, dass** es eine Verbindung der Formel II1,

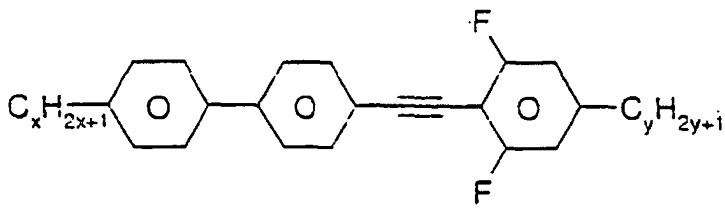

II1

worin

x und y jeweils unabhängig voneinander 1-10 bedeuten, wobei $x+y \leq 10$ ist,

bedeuten,
enthält.

4. Nematische Flüssigkristallmischung nach einem der Ansprüche 1 bis 3, **dadurch gekennzeichnet, dass** sie zusätzlich eine oder mehrere Verbindungen der Formeln IIIa bis IIIj enthält,

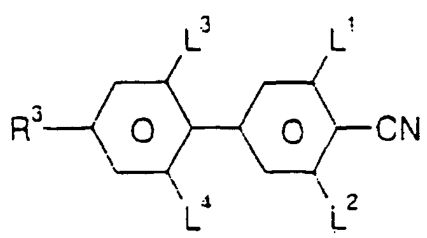

IIIa

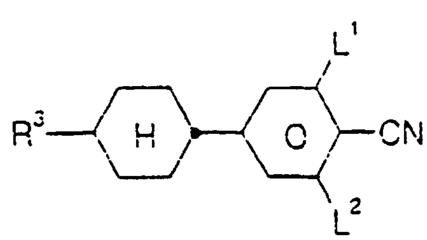

IIIb

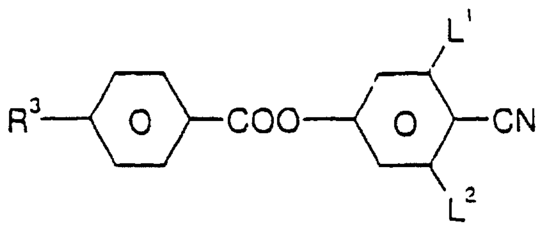

IIIc

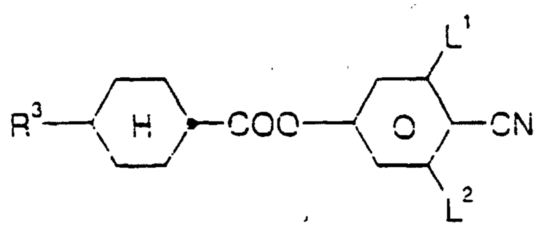

IIId

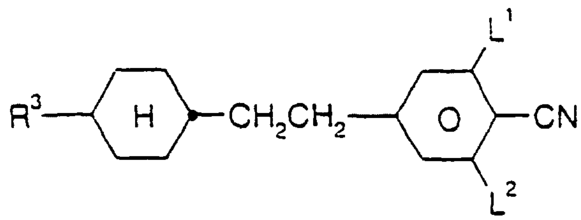

IIIe

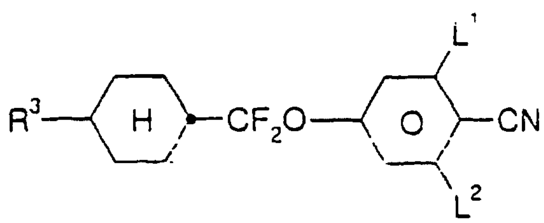

IIIf

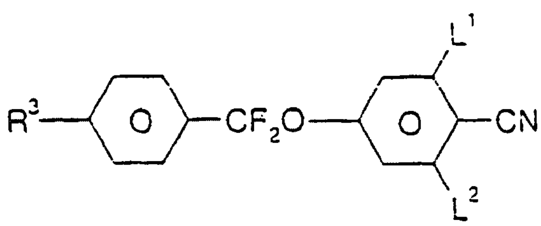

IIIg

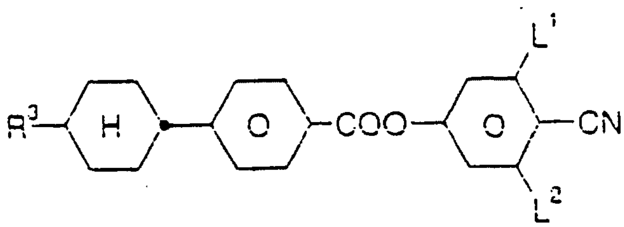

IIIh

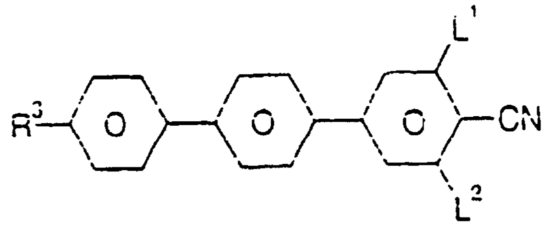

IIIi

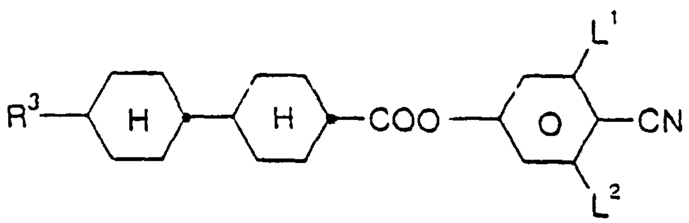

IIIj

worin $R^3$ eine für $R^1$ angegebenen Bedeutungen besitzt und $L^{1-4}$ jeweils unabhängig voneinander H oder F bedeuten.

**5.** Nematische Flüssigkristallmischung nach einem der Ansprüche 1 bis 4,
**dadurch gekennzeichnet, dass** sie eine oder mehrere Verbindungen der Formeln III*i bis III*l enthält

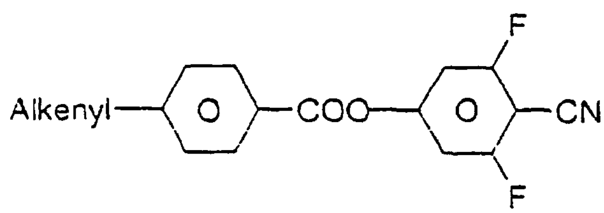

III*i

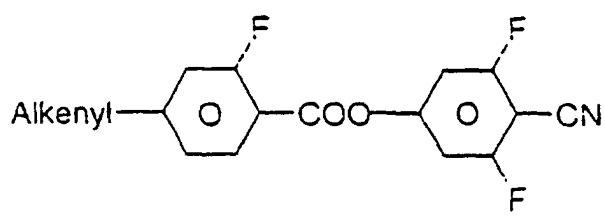

III*j

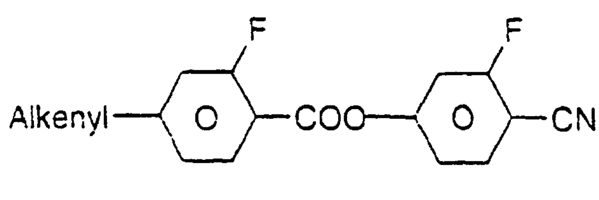

III*k

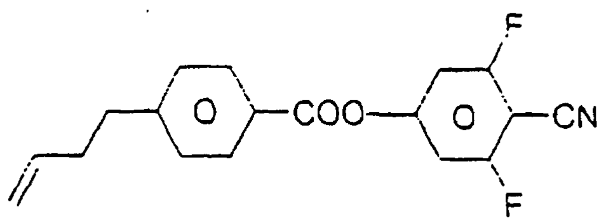

III*1

6. Nematische Flüssigkristallmischung nach einem der Ansprüche 1 bis 5, **dadurch gekennzeichnet, dass** sie zusätzlich ein oder mehrere Verbindungen der Formeln VIa bis VIe enthält,

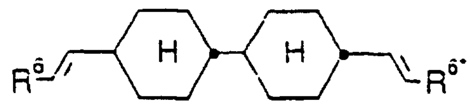

VIa

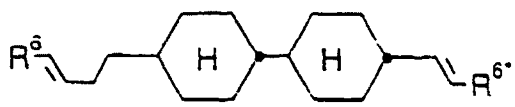

VIb

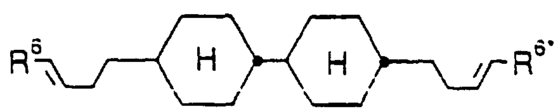

VIc

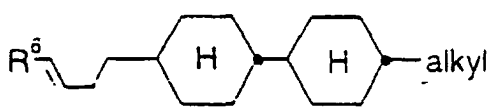

VId

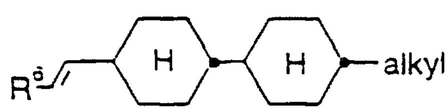

VIe

worin

| | |
|---|---|
| $R^6$ und $R^{6*}$ | jeweils unabhängig voneinander H, $CH_3$, $C_2H_5$ oder n-$C_3H_7$, |
| alkyl | eine geradkettige Alkylkette mit 1 bis 7 C-Atomen |

bedeuten.

7. Nematische Flüssigkristallmischung nach einem der Ansprüche 1 bis 6, **dadurch gekennzeichnet, daß** $L^3$ und $L^4$ in Formel I**R F bedeuten.

8. TN- oder STN-Flüssigkristallanzeige mit

- zwei Trägerplatten, die mit einer Umrandung eine Zelle bilden,

- einer in der Zelle befindlichen nematischen Flüssigkristallmischung mit positiver dielektrischer Anisotropie,
- Elektrodenschichten mit Orientierungsschichten auf den Innenseiten der Trägerplatten,
- einem Anstellwinkel zwischen der Längsachse der Moleküle an der Oberfläche der Trägerplatten und den Trägerplatten von 0 Grad bis 30 Grad, und
- einem Verdrillungswinkel der Flüssigkristallmischung in der Zelle von Orientierungsschicht zu Orientierungsschicht dem Betrag nach zwischen 22,5° und 600°,
- einer nematischen Flüssigkristallmischung bestehend aus

a) 15 - 75 Gew.% einer flüssigkristallinen Komponente A, bestehend aus einer oder mehreren Verbindungen mit einer dielektrischen Anisotropie von über +1,5;
b) 25 - 85 Gew.% einer flüssigkristallinen Komponente B, bestehend aus einer oder mehreren Verbindungen mit einer dielektrischen Anisotropie zwischen -1,5 und +1,5;
c) 0 - 20 Gew.% einer flüssigkristallinen Komponente D, bestehend aus einer oder mehreren Verbindungen mit einer dielektrischen Anisotropie von unter -1,5 und
d) gegebenenfalls einer optisch aktiven Komponente C in einer Menge, daß das Verhältnis zwischen Schichtdicke (Abstand der Trägerplatten) und natürlicher Ganghöhe der chiralen nematischen Flüssigkristallmischung etwa 0,2 bis 1,3 beträgt,

**dadurch gekennzeichnet, daß** die Komponente A der Flüssigkristallmischung mindestens eine Verbindung der Formel I und mindestens eine Verbindung der Formel I**R enthält,

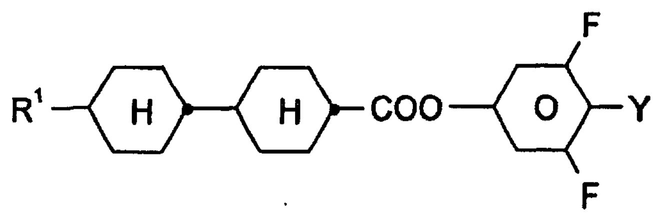

I

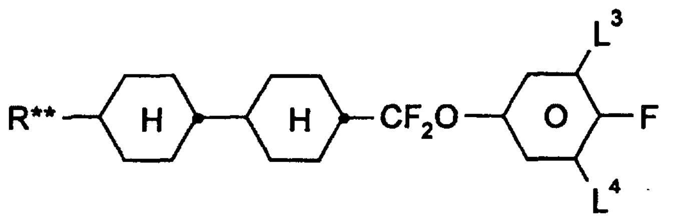

I**R

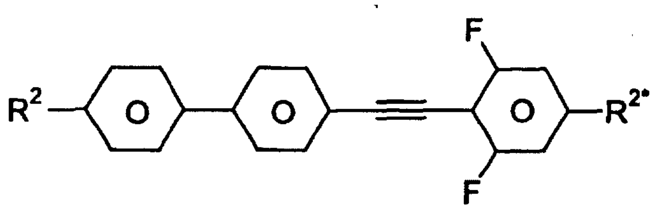

II

worin $R^1$, $R^2$, $R^{2*}$, $R^{**}$, Y, $L^3$ und $L^4$ die in Anspruch 1 angegebene Bedeutung haben.

## Claims

**1.** Nematic liquid-crystal mixture, **characterised in that** it comprises one or more compounds of the formula I

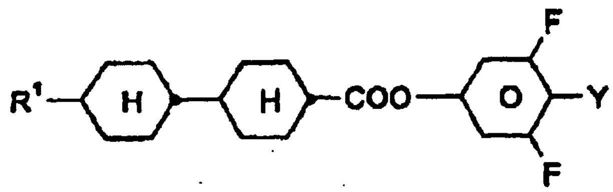

I

one or more compounds of the formula II

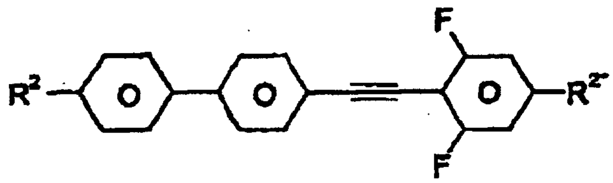

II

and one or more compounds of the formula I**R

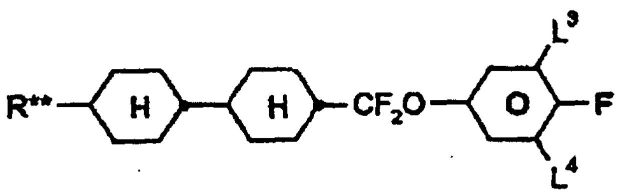

I**R

in which the individual radicals have the following meaning:

| | |
|---|---|
| $R^1$, $R^2$, $R^{2*}$ and $R^{**}$ | are each, independently of one another, an optionally fluorinated alkyl, alkoxy, alkenyl or alkenyloxy group having up to 12 C atoms, in which, in addition, one or two non-adjacent $CH_2$ groups may be replaced by -O-, -CH=CH-, -CO-, -OCO- or -COO- in such a way that O atoms are not linked directly to one another, |
| Y | is F, Cl, $OCF_3$, $OCHF_2$ or $OCHFCF_3$, and |
| $L^3$ and $L^4$ | are each, independently of one another, H or F. |

**2.** Nematic liquid-crystal mixture according to Claim 1, **characterised in that** Y in the formula I is fluorine.

**3.** Nematic liquid-crystal mixture according to Claim 1 or 2, **characterised in that** it comprises a compound of the formula II1

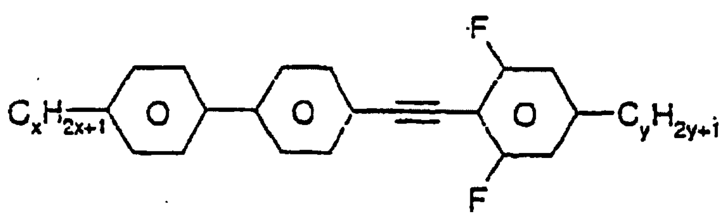

II1

in which

xandy are each, independently of one another, 1-10, where x+y is ≤ 10.

**4.** Nematic liquid-crystal mixture according to one of Claims 1 to 3, **characterised in that** it additionally comprises

one or more compounds of the formulae IIIa to IIIj

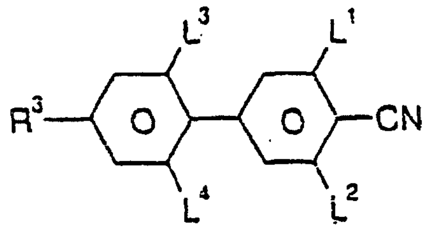

IIIa

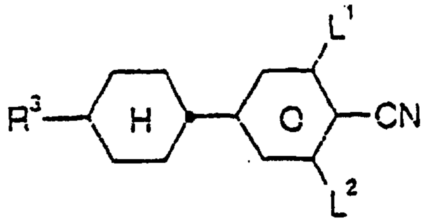

IIIb

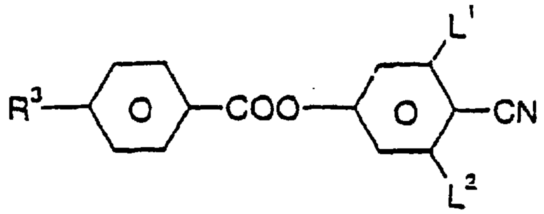

IIIc

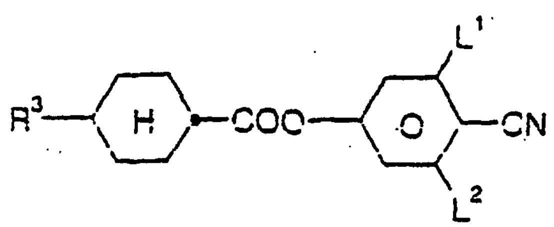

IIId

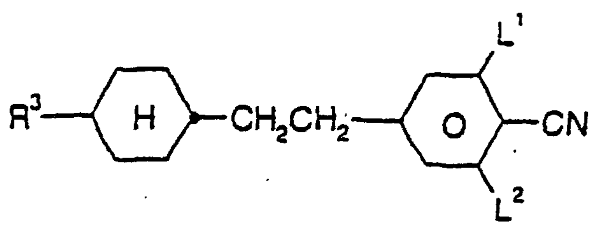

IIIe

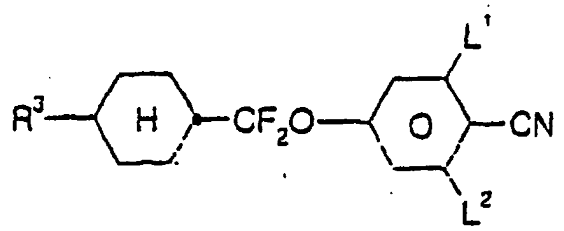

IIIf

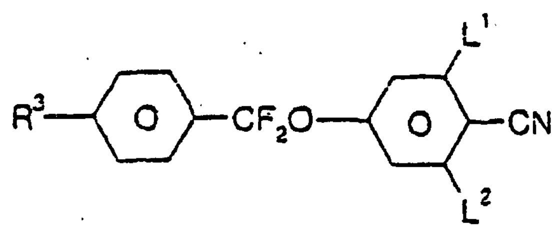

IIIg

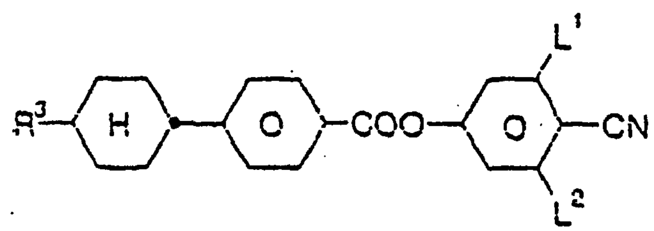

IIIh

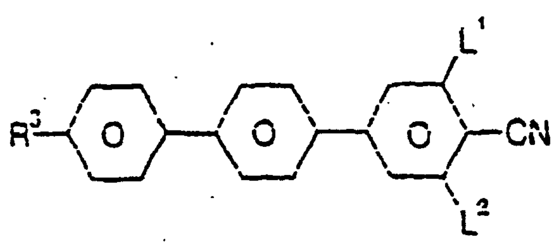

IIIi

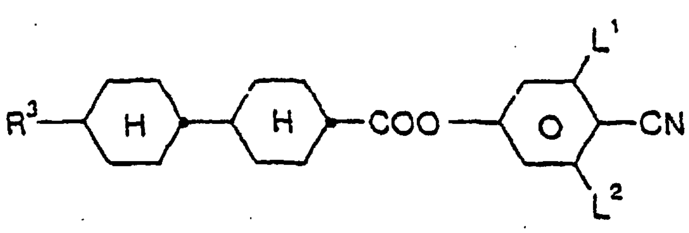

IIIj

in which $R^3$ has one of the meanings indicated for $R^1$, and $L^{1-4}$ are each, independently of one another, H or F.

**5.** Nematic liquid-crystal mixture according to one of Claims 1 to 4, **characterised in that** it comprises one or more compounds of the formulae III*i to III*l

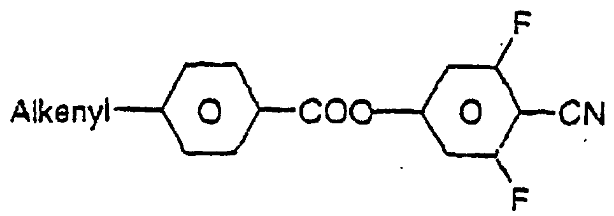

III*i

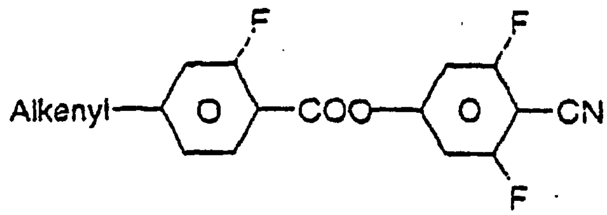

III*j

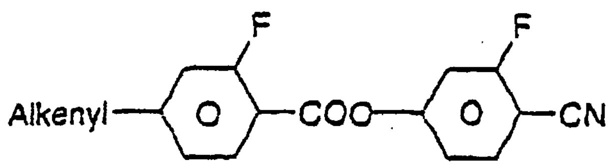

III*k

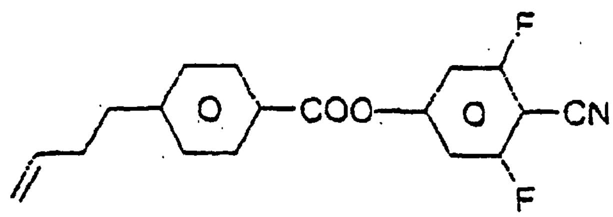

III*l

**6.** Nematic liquid-crystal mixture according to one of Claims 1 to 5, **characterised in that** it additionally comprises one or more compounds of the formulae Via to VIe

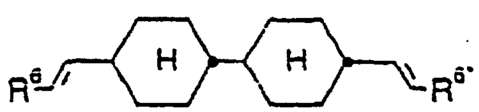

VIa

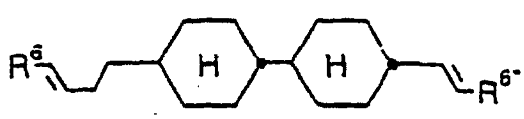

VIb

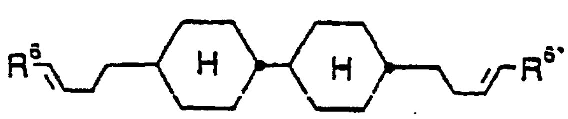

VIc

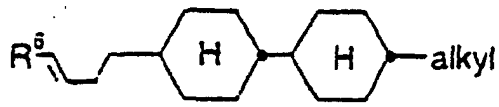

VId

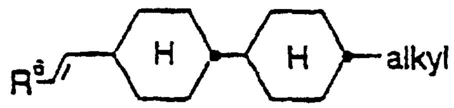

VIe

in which

| | |
|---|---|
| $R^6$ and $R^{6*}$ | are each, independently of one another, H, $CH_3$, $C_2H_5$ or n-$C_3H_7$, |
| alkyl | is a linear alkyl chain having from 1 to 7 C atoms. |

**7.** Nematic liquid-crystal mixture according to one of Claims 1 to 6, **characterised in that** $L^3$ and $L^4$ in the formula I**R are F.

**8.** TN or STN liquid-crystal display having

- two outer plates which, with a frame, form a cell,
- a nematic liquid-crystal mixture of positive dielectric anisotropy located in the cell,
- electrode layers with alignment layers on the insides of the outer plates,
- a tilt angle between the longitudinal axis of the molecules at the surface of the outer plates and the outer plates of from 0 degree to 30 degrees, and
- a twist angle of the liquid-crystal mixture in the cell from alignment layer to alignment layer with a value of between 22.5° and 600°,
- a nematic liquid-crystal mixture consisting of

a) 15 - 75% by weight of a liquid-crystalline component A, consisting of one or more compounds having a dielectric anisotropy of above +1.5;
b) 25 - 85% by weight of a liquid-crystalline component B, consisting of one or more compounds having a dielectric anisotropy of between -1.5 and +1.5;
c) 0 - 20% by weight of a liquid-crystalline component D, consisting of one or more compounds having a dielectric anisotropy of below -1.5 and
d) optionally an optically active component C in such an amount that the ratio between the layer thickness (separation of the outer plates) and the natural pitch of the chiral nematic liquid-crystal mixture is from about 0.2 to 1.3,

**characterised in that** component A of the liquid-crystal mixture comprises at least one compound of the formula I and at least one compound of the formula I**R

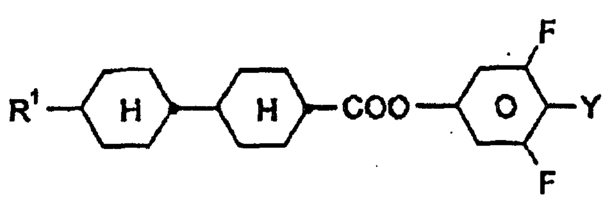

I

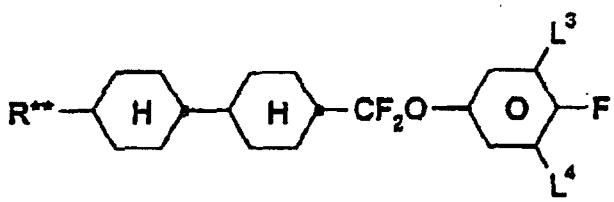

I**R

and component B of the liquid-crystal mixture comprises at least one compound of the formula II

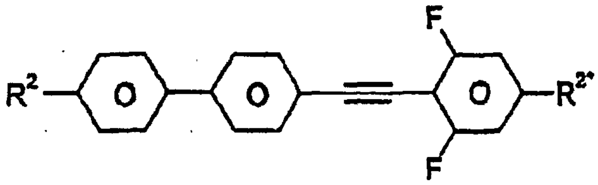

II

in which $R^1$, $R^2$, $R^{2*}$, $R^{**}$, Y, $L^3$ and $L^4$ are as defined in Claim 1.

**Revendications**

1. Composition de cristaux liquides nématiques, **caractérisée en ce qu'**elle contient un ou plusieurs composés de formule I

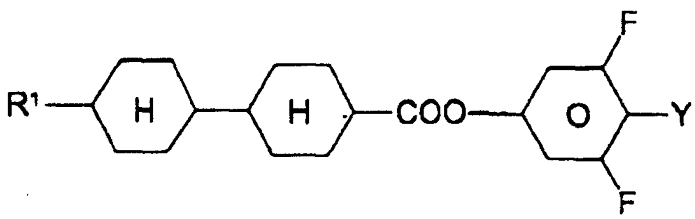

I

un ou plusieurs composés de formule II

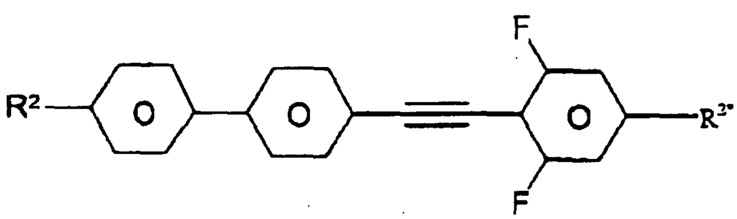

II

et un ou plusieurs composés de formule I**R

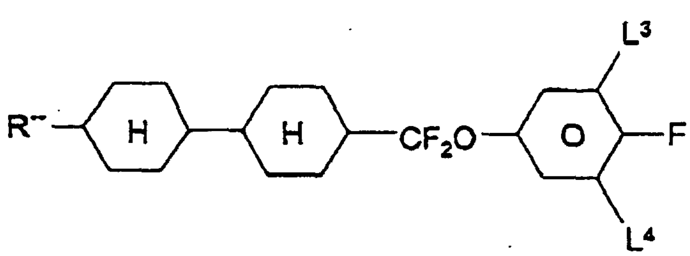

I**R

où les différents restes ont les significations suivantes :

| | |
|---|---|
| $R^1$, $R^2$, $R^{2*}$ et $R^{**}$ | représentent, indépendamment les uns des autres, un groupe alkyle, alcoxy, alcényle ou alcényloxy éventuellement fluoré comportant jusqu'à 12 atomes de C, un ou deux groupes $CH_2$ non adjacents pouvant être également remplacés par -O-, $-CH=C_H-$, -CO-, -OCO- ou -COO- de telle façon que les atomes d'O ne soient pas directement reliés entre eux, |
| Y | représente F, Cl, $OCF_3$, $OCHF_2$ ou $OCHFCF_3$ et |
| $L^3$ et $L^4$ | représentent, indépendamment l'un de l'autre, H ou F. |

**2.** Composition de cristaux liquides nématiques selon la revendication 1, **caractérisée en ce que** Y représente dans la formule I le fluor.

**3.** Composition de cristaux liquides nématiques selon la revendication 1 ou 2, **caractérisée en ce qu'**elle contient un composé de formule II1

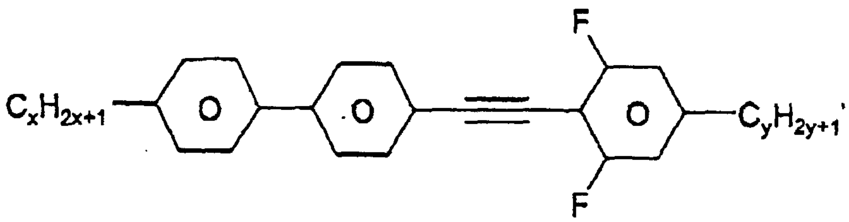

II1

où
x et y sont compris, indépendamment l'un de l'autre, entre 1 et 10, x+y étant ≤ 10.

**4.** Composition de cristaux liquides nématiques selon l'une des revendications 1 à 3, **caractérisée en ce qu'**elle contient en plus un ou plusieurs composés de formule IIIa à IIIj

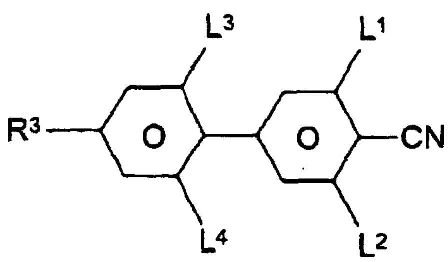

IIIa

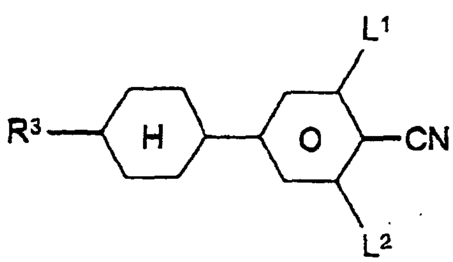

IIIb

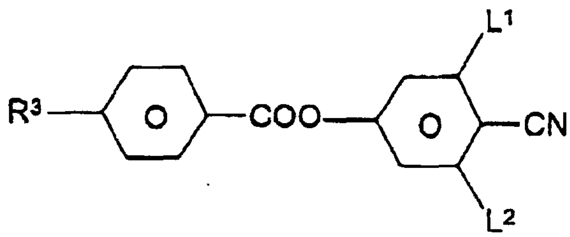

IIIc

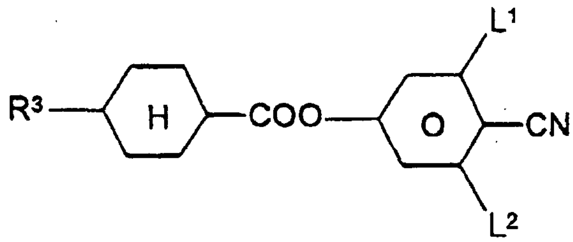

IIId

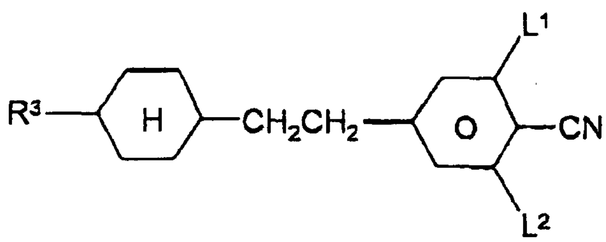

IIIe

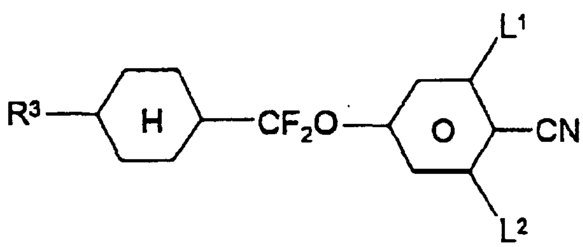

IIIf

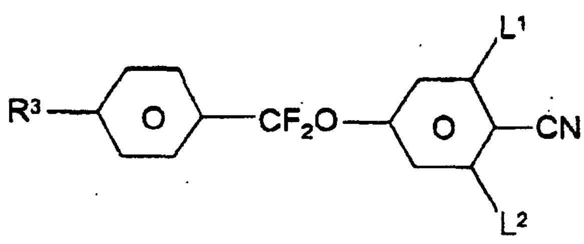

IIIg

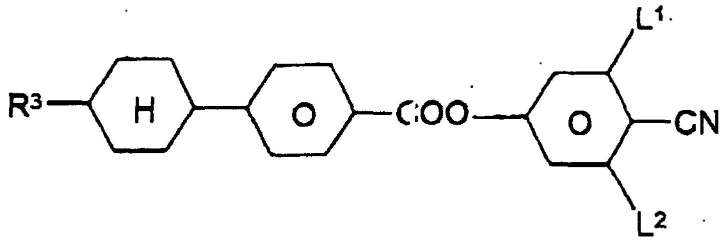

IIIh

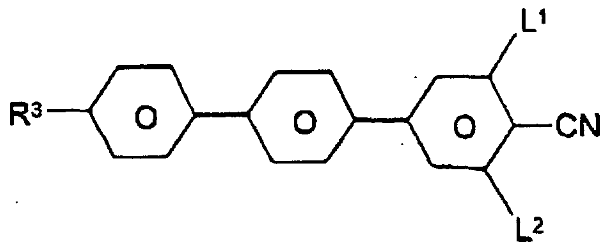

IIIi

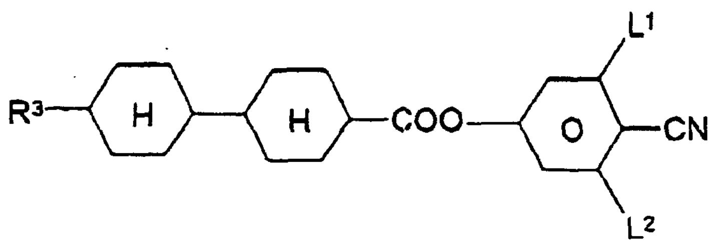

IIIj

où $R^3$ a l'une des significations indiquées pour $R^1$ et $L^{1-4}$ représentent, indépendamment les des autres, H ou F.

**5.** Composition de cristaux liquides nématiques selon l'une des revendications 1 à 4, **caractérisée en ce qu'**elle contient un ou plusieurs composés de formules III*i à III*l,

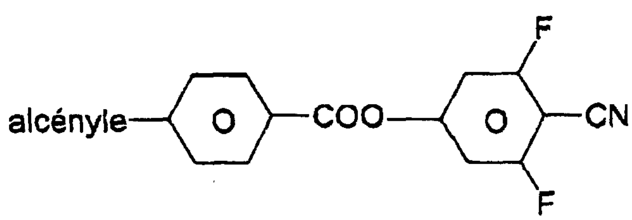

III*i

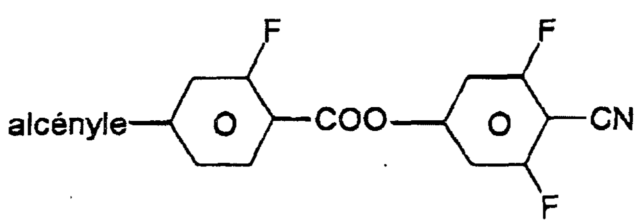

III*j

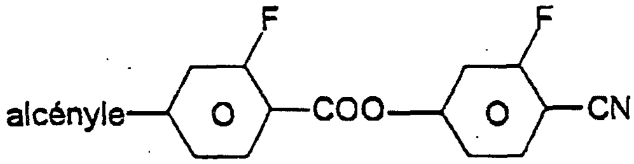

III*k

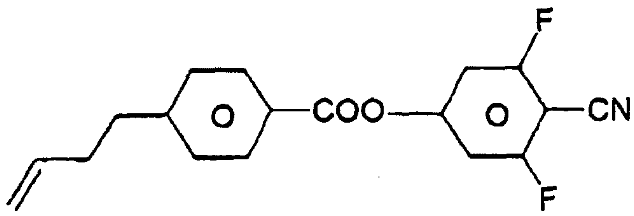

III*l

6. Composition de cristaux liquides nématiques selon des revendications 1 à 5, **caractérisée en ce qu'**elle contient en plus un ou plusieurs composés de formules VIa à VIe

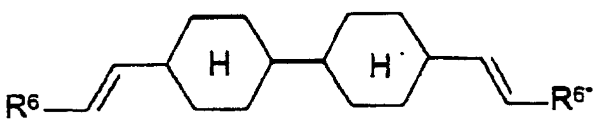

VIa

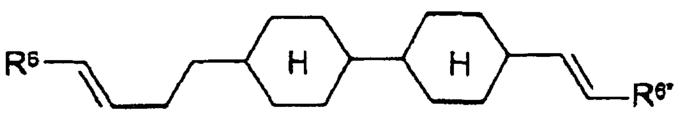

VIb

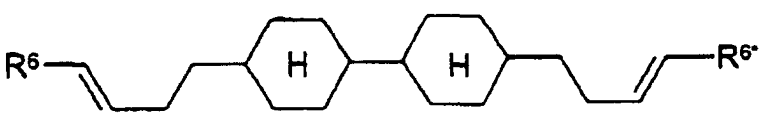

VIc

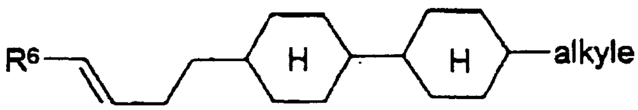

VId

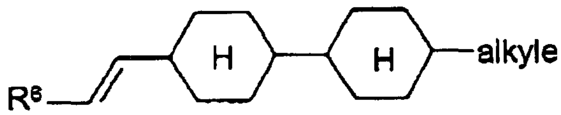

VIe

où

$R^6$ et $R^{6*}$ représentent, indépendamment l'un de l'autre H, $CH_3$, $C_2H_5$ ou n-$C_3H_7$,
alkyle représente une chaîne alkyle droite comportant 1 à 7 atomes de C.

**7.** Composition de cristaux liquides nématiques selon l'une des revendications 1 à 6, **caractérisée en ce que** $L^3$ et $L^4$ représentent dans la formule I**R F.

**8.** Afficheur à cristaux liquides TN ou STN comportant

- deux plaques de support formant avec une bordure une cellule,
- une composition de cristaux liquides nématiques présentant une anisotropie diélectrique positive, se trouvant dans la cellule,
- des couches d'électrodes comportant des couches d'orientation sur les faces intérieures des plaques de support,
- un angle d'incidence entre l'axe longitudinal des molécules sur la surface des plaques de support et les plaques de support compris entre 0 et 30° et
- un angle de torsion de la composition de cristaux liquides dans la cellule d'une couche d'orientation à l'autre par module compris entre 22,5° et 600°,
- une composition de cristaux liquides nématiques constituée

a) de 15 à 75 % en poids d'un composant A cristaux liquides formé d'un ou plusieurs composés ayant une anisotropie diélectrique supérieure à +1,5,
b) de 25 à 85 % en poids d'un composant B cristaux liquides formé d'un ou plusieurs composés ayant une anisotropie diélectrique comprise entre -1,5 et +1,5,
c) de 0 à 20 % en poids d'un composant D cristaux liquides formé d'un ou plusieurs composés ayant une anisotropie diélectrique inférieure à -1,5 et
d) éventuellement d'un composant C optiquement actif en une quantité telle que le rapport entre l'épaisseur de la couche (espacement des plaques de support) et le pas naturel de la composition de cristaux liquides nématiques chiraux soit compris entre environ 0,2 et environ 1,3,

**caractérisé en ce que** le composant A de la composition de cristaux liquides contient au moins un composé de formule I et au moins un composé de formule I**R

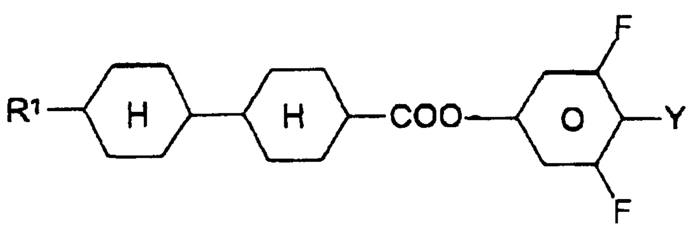

I

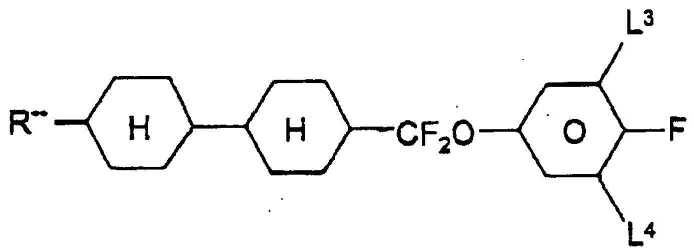

I**R

et le composant B de la composition de cristaux liquides contient au moins un composé de formule II

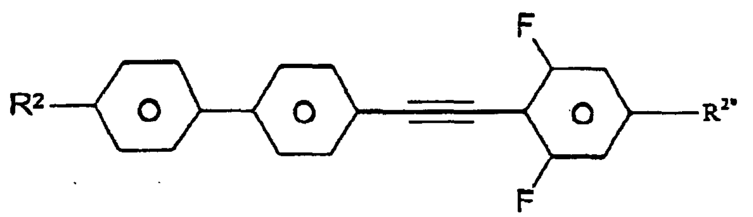

II

où $R^1$, $R^2$, $R^{2*}$, $R^{**}$, Y, $L^3$ et $L^4$ ont les significations indiquées dans la revendication 1.